# FASCICULE DE BREVET EUROPEEN

(11) **EP 1 569 989 B1**
(45) Date de publication et mention de la délivrance du brevet: **16.04.2008**
(21) Numéro de dépôt: 03767904.0
(22) Date de dépôt: 04.11.2003
(51) Int. Cl.: C08J 7/18, C08F 292/00, C08F 291/18

(54) **PROCEDE DE TRAITEMENT DE SURFACE PAR PHOTOPOLYMERISATION POUR OBTENIR DES PROPRIETES BIOCIDES**
VERFAHREN ZUR OBERFLÄCHENBEHANDLUNG DURCH PHOTOPOLYMERSATION, UM BIOZIDE EIGENSCHAFTEN ZU BEKOMMEN
SURFACE TREATMENT METHOD BY PHOTOPOLYMERIZATION TO OBTAIN BIOCIDAL PROPERTIES

(30) Priorité: 08.11.2002 FR 0214064
(43) Date de publication de la demande: 07.09.2005
(73) Titulaire: Desarrollo del Grafting S.L., 08021 Barcelona (ES)
(72) Inventeur: PERICHAUD, Alain, F-13013 Marseille (FR); ARNAUTU, Monica, F-13004 Marseille (FR)
(74) Mandataire: Domange, Maxime
(86) Numéro de dépôt international: PCT/FR2003/003292
(87) Numéro de publication internationale: WO 2004/044040

(56) Documents cités:
- DD-A- 151 073
- FR-A- 2 749 854
- US-A- 6 096 800
- US-B1- 6 248 811

## Description

La présente invention concerne un procédé de traitement de la surface d'un substrat solide en vue de lui conférer des propriétés biocides et notamment anti-bactériennes.

Plus particulièrement, la présente invention concerne un procédé de traitement de surface par photopolymérisation et greffage covalent sur ledit substrat solide d'un copolymère comportant des groupements ayant une activité biocide.

La présente invention concerne des substrats solides comportant un dit copolymère greffé à leur surface, obtenu par ledit procédé.

La présente invention concerne le traitement de substrats solides pouvant être utilisés pour la fabrication de tous types de produits ou matériels et notamment des textiles, revêtements de sol, dispositifs sanitaires notamment pour collectivités, instruments et matériels médicaux.

Ledit substrat solide peut être réalisé en tous types de matériaux, à savoir des matériaux organiques ou inorganiques, naturels ou synthétiques. On cite plus particulièrement comme matériaux organiques des matériaux du type plastique, et des matériaux à base de polymères naturels tels que des polysaccharides comme le papier ou le bois.

Plus particulièrement encore, la présente invention concerne le traitement de matériaux organiques fibreux tels que des matériaux textiles ou matériaux non tissés, réalisés à base de fils ou fibres synthétiques tels que des fils ou fibres polyester, polyamides ou polyacryliques ou des fibres naturelles notamment à base de coton ou de laine, ou dans le cas du papier, des fibres de cellulose.

Comme matériau inorganique, on cite plus particulièrement des matériaux céramiques, du verre ou des métaux.

Dans la présente description, on entend par « activité biocide » toute activité anti-microbienne ou antiseptique, c'est-à-dire aussi bien des activités anti-bactérienne, à savoir bactéricide et/ou bactériostatique, anti-fongique, anti-levure et plus particulièrement tous types de micro-organismes, notamment nocifs, voire pathogènes.

Dans le brevet antérieur de la demanderesse, WO98/29463, on a décrit des homopolymères présentant une forte activité anti-microbienne comportant des ammoniums quaternaires en quantité prépondérante constitués d'une résine ester et/ou amide à laquelle sont liés par une liaison covalente des sels d'ammonium quaternaire et dans lesquels le taux d'ammonium quaternaire est d'au moins 80% de la masse du polymère.

Dans WO98/29463, ces polymères étaient plus particulièrement utilisés pour la fabrication de peinture, de revêtement applicable sur tout type d'objets pour lesquels il est nécessaire de se prémunir contre les risques de développement de micro-organismes et en particulier de bactéries. Ledit homopolymère était utilisé à titre de liant dans lesdites peintures ou revêtements.

Dans ce brevet WO 98/29463, les homopolymères pouvaient être obtenus par polymérisation de monomères comportant un groupement ammonium quaternaire, soit en phase solvant organique, soit en phase aqueuse. Il s'agissait de polymérisation radicalaire, la température de réaction étant maintenue vers 80°C.

Dans WO 98/29463, les polymères comportant des groupements de sels d'ammonium quaternaire répondent à la formule générale (la) : 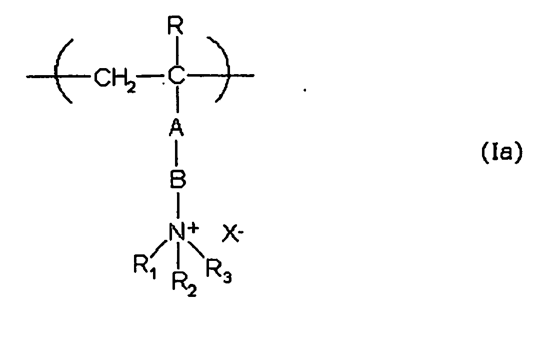 dans laquelle :
- A représente un reste identique ou différent choisi parmi : 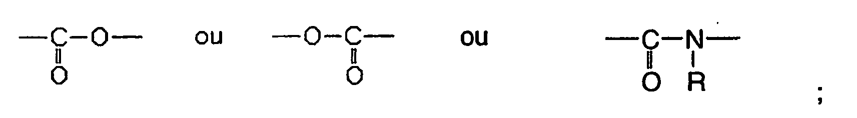
- R représente H or CH₃;
- B représente une chaîne alkylène en C₀-C₅, linéaire ou ramifiée, ou un groupe arylène or arylalkylène;
- R₁ et R₂, qui sont identiques ou différents, chacun représente une chaîne alkyle en C₁ -C₅;
- R₃ représente une chaîne alkyle en C₈-C₂₀ ou un groupe aryle ou arylalkyle;
- X⁻ représente un anion;
dans lesquels le taux d'ammonium quaternaire est supérieur à 1 mole/kg.

Les monomères comportant un groupement ammonium quaternaire de formule (la) sont très efficaces en terme d'effet biocide, mais sont difficiles à photopolymériser et à greffer sur un substrat solide.

C'est pourquoi ces polymères biocides sont simplement déposés à la surface des substrats solides à revêtir où ils bénéficient d'une adhésion relativement forte par adsorption à la surface par le biais d'interaction physico-chimique.

Cependant, pour certaines applications, les liaisons desdits polymères à la surface du substrat solide ne sont pas suffisamment fortes et stables pour maintenir l'activité biocide et/ou bio statique de façon prolongée dans le temps. C'est en particulier le cas pour des objets susceptibles de connaître des lavages fréquents ou entretien de nettoyages fréquents, les propriétés antiseptiques ou biocides n'ayant pas alors une durabilité ni une résistance suffisantes aux conditions d'usage et d'entretien. C'est également le cas des matériels médicaux tels que, par exemple : cathéters, sondes gastriques, poche de recueil de sang, pour lesquels le biocide ne doit pas être relargué.

Dans FR 2 695 800 et EP 591 024, on a décrit des polymères biocides ou antiseptiques comportant des groupements ammonium quaternaire attaché à un reste méthacrylate ou méthacrylamide, lesdits polymères étant greffés sur un substrat de fibres textiles par activation radicalaire sous l'effet de rayonnement ionisant tel que rayonnement gamma ou par bombardement électronique sur ledit substrat en présence des monomères comportant des groupements ammonium quaternaire.

Toutefois, la mise en oeuvre à l'échelle industrielle de ce type de polymérisation et de greffage du composé sur le substrat représente un investissement technologique très lourd et présente des risques d'effet nocif tel le rayonnement pour le personnel.

Dans WO 97/47696, on a cherché à polymériser des monomères comportant des groupements ammonium quaternaire du type des monomères de formule (la) du brevet WO 98/29463 par photo activation au contact du substrat constitué de matériaux devant servir à des instruments à usage médical réalisés en matériaux de base de type polyuréthane ou silicone, afin d'augmenter l'adhésion du polymère sur ledit substrat, ladite polymérisation étant obtenue par exposition à un rayonnement ultraviolet.

Dans WO 97/47696, on a recours à une formulation comportant 4 composants essentiels, à savoir: un monomère comportant des groupements ammonium quaternaire bactéricides, un oligomère réticulable, notamment du type polyuréthane diacrylate pour une adhésion sur le substrat en polyuréthane, un agent photoamorceur et des monomères mono ou multifonctionnels dont la fonction de diluant réactif modifie la vitesse de polymérisation, les propriétés physico-chimiques du copolymère réticulé obtenu et la viscosité de la formulation.

Les procédés de photopolymérisation sous rayonnement UV sont avantageux car facilement mis en oeuvre industriellement. Toutefois, le procédé de traitement décrit dans WO 97/47696 est spécifique pour les substrats constitués de polyuréthane et surtout ne permet pas un greffage du polymère obtenu sur les substrats solides traités, mais seulement un dépôt dont l'adhérence est basée sur la compatibilité des deux polymères (polyuréthane).

De même, dans WO 00/05281 on réalise le dépôt, notamment sur un substrat textile, d'un produit biocide obtenu par copolymérisation radicalaire, par simple imprégnation en utilisant la technique de foulardage, suivi par l'évaporation des solvants. Le produit bactéricide déposé de cette manière est susceptible d'être enlevé par lavage ou par des autres techniques d'entretien domestique ou nettoyage à sec.

Dans EP 0955069 il est décrit un procédé de traitement d'un matériau par une solution dans laquelle est dissoute une «molécule ionique» et/ou un «polymère ionique» qui réagissent avec un agent précipitant pour former, in situ, sur ledit matériau un dépôt insoluble, mais l'agent précipitant est fixé sur le substrat en utilisant, là encore, la technique de bombardement électronique, procédé coûteux et nocif.

WO 93/17746 décrit l'obtention d'implants médicaux ou des cathéters qui ont été recouverts avec un antibiotique ou avec des mélanges d'antibiotiques par simple liaison ionique entre celui-ci et le substrat.

Le brevet FR 2 751 882 décrit plusieurs procédés de modification de surface de différents substrats par activation chimique ou physique faisant appel à des techniques classiques d'activation par oxydation chimique dure ou par plasma. Ce brevet fait encore appel à des techniques assez laborieuses de traitement chimique, ou encore à des techniques par plasma qui impliquent des investissements financiers lourds.

Dans US 6 248 811, on prépare des revêtements de polymères bactéricides, fixés de façon covalente sur un support qui est un film de polysiloxane.

Le monomère bactéricide présente une formule spécifique R-(A)n, A étant un groupement acide ou sel d'acide sulfonique dans les exemples de réalisation et étendu à d'autres groupes acides (carboxyliques, sulfuriques, phosphoriques et phosphoniques) dans la revendication 1.

Dans le procédé de US 6 248 811, on réalise les étapes successives suivantes de :
- synthèse du copolymère par copolymérisation sous traitement UV de monomères bactéricides et de monomères sensibles aux UV, et
- activation préalable du substrat à revêtir du polymère par différents traitements physiques tels les traitements UV, corona, plasma, bombardements électroniques, etc..., et
- dépôt en solution du copolymère préformé sur le support activé suivi d'un nouveau traitement physique de greffage, notamment par irradiation UV.

La procédure décrite est donc longue et laborieuse à mettre en oeuvre, impliquant trois étapes : synthèse préalable du copolymère, activation du support et traitement physique de greffage du copolymère sur un support activé.

Les procédés d'activation du support risque de dégrader les supports polymériques et ne sont pas applicables pour n'importe quel type de support polymérique autre que polysiloxane. En outre, après la mise en contact du copolymère préformé en solution et du support, l'ensemble doit subir un traitement physique, notamment être irradié sous UV pendant un temps assez long, pour réaliser le greffage, de sorte que ce type de traitement ne peut pas être réalisé pour n'importe quel type de monomère bactéricide. En particulier, les monomères biocides d'ammonium quaternaire de larges spectres d'activités, à la fois antibactériens et antifongiques de formule 1a, telle que décrite dans WO 98/29463, ne supporteraient pas un traitement UV d'une durée et intensité telle que décrites dans ce brevet US 6 248 811.

Enfin, dans le brevet US 6248811, le copolymère préformé devant être soluble, le copolymère biocide greffé obtenu ne peut pas être réticulé, ce qui limite les propriétés de résistance mécanique et résistance aux agents chimiques et autres conditions d'environnement.

Le but de la présente invention est de fournir un procédé de traitement de surface d'un substrat solide, afin d'obtenir le greffage covalent à la surface dudit substrat solide, de polymères comportant des groupements biocide, notamment d'ammonium quaternaire, par un procédé ne nécessitant pas la mise en oeuvre de moyens technologiques importants tels que les rayonnements gamma ou bombardements électroniques.

Un autre but de la présente invention est de fournir un procédé de traitement de surface d'un substrat solide permettant de greffer, sur le substrat solide de façon covalente, un copolymère biocide réticulé.

Un autre but de la présente invention est de fournir un procédé de greffage de copolymères biocides à la surface d'un substrat solide, qui soit simple et peu coûteux à réaliser, tout en fournissant des caractéristiques de revêtement améliorées en terme de comportement mécanique et résistance aux conditions d'environnement et, plus particulièrement, d'obtenir des épaisseurs de revêtement plus importantes éventuellement.

Pour ce faire, les inventeurs ont découvert qu'il était possible de réaliser un greffage d'un polymère biocide notamment comportant des groupements ammonium quaternaire sur tout type de substrat solide, en ayant recours à une photopolymérisation radicalaire ou cationique ou hybride (radicalaire et cationique) sous un rayonnement UV, sous réserve de mettre en oeuvre une méthode de traitement et des réactifs appropriés.

Plus précisément, la présente invention fournit un procédé de traitement de la surface d'un substrat solide dans lequel on réalise une photopolymérisation et un greffage covalent in situ sur ledit substrat d'un copolymère biocide ou antiseptique, caractérisé en ce qu'on effectue des étapes dans lesquelles :
a) on met en contact ledit substrat solide avec une formulation comprenant :
   1- au moins un monomère comportant un groupement biocide,
   2- au moins un composé copolymérisable avec ledit monomère biocide comprenant un monomère ou oligomère mono - di - ou plurifonctionnel(s) choisi parmi les monomères ou oligomères acrylate, époxyde ou vinyléther,
   3- au moins un photoamorceur choisi parmi des photoamorceurs radicalaires et/ou cationiques, et
   4- au moins un agent de greffage sur ledit substrat, et
b) On réalise une photocopolymérisation et un greffage covalent des copolymères obtenus en soumettant ladite formulation en contact avec ledit substrat solide à un rayonnement ultraviolet.

Selon la présente invention, on a donc découvert que moyennant l'utilisation de monomères ou oligomères copolymérisables, réactifs appropriés et d'amorceurs de greffage appropriés, il était possible d'obtenir, par traitement UV, des polymères contenant suffisamment de groupements biocides, notamment d'ammonium quaternaire d'une part, et d'autre part, un greffage desdits polymères de façon covalente sur le substrat, de façon à obtenir des propriétés biocides résistantes de façon durable sur ledit substrat solide traité, sans relargage dans l'environnement.

Le procédé selon l'invention permet donc d'obtenir un effet biocide résistant durable par un procédé de traitement de surface simple à réaliser conformément au but de la présente invention.

Dans un mode préféré de réalisation du procédé, à l'étape a) de mise en contact de ladite formulation avec ledit substrat, on réalise les 2 sous-étapes successives suivantes :
a1) on met en contact ledit substrat solide avec une première formulation partielle contenant ledit photoamorceur et ledit agent de greffage, et
a2) après séchage, on ajoute une seconde formulation partielle contenant ledit monomère biocide et ledit composé copolymérisable.

De cette manière, on assure un meilleur contact du photoamorceur et de l'agent de greffage avec le substrat, ce qui améliore le taux de greffage des copolymères biocides sur ledit substrat comme cela a été démontré selon la présente invention, dans les exemples ci-après.

Par « mise en contact » on entend qu'une solution de ladite formulation est déposée sur ledit substrat s'il s'agit d'un substrat présentant une surface plane tel qu'un film, une feuille ou une plaque, ou que ledit substrat est imprégné d'une dite solution de formulation, il s'agit d'un substrat fibreux, tissé ou non tissé ou d'un fil. Dans les 2 cas, ladite mise en contact peut être réalisée par pulvérisation d'une solution de ladite formulation sur ledit substrat ou par trempage dudit substrat dans une solution de ladite formulation.

Ce mode de réalisation préféré dans lequel l'étape a) de mise en contact comporte 2 sous-étapes a1) et a2), est particulièrement avantageux pour le traitement de matériaux tissés ou non tissés dont les fils ou fibres peuvent ainsi être davantage imprégnés des réactifs de photo amorçage et d'agents de greffage, contribuant ainsi à améliorer la réaction de polymérisation et de greffage sur le substrat lors de la mise en oeuvre du rayonnement UV.

Dans un mode de réalisation avantageux, à l'étape 2), on applique un rayonnement ultraviolet d'une intensité consignée de 10 à 5000 mW/cm² de longueur d'onde comprise entre 280 et 500 nm, et de préférence, on utilise un filtre permettant l'élimination des radiations infrarouges et l'irradiation à une longueur d'ondes de 360 à 500 nm.

Plus particulièrement, à l'étape 2) on réalise l'irradiation ultraviolet pendant 5 à 60 secondes, de préférence 10 à 30 secondes, avec une intensité de 100 à 1000 mW/cm².

Plus particulièrement, après l'étape 2 on réalise une étape suivante dans laquelle :
3) on achève la polymérisation par une polymérisation thermique en séchant ledit substrat dans un four à température comprise entre 100 et 180°C.

Pour effectuer des photopolymérisations, on peut utiliser n'importe quel type de lampe UV, de diverses dimensions et puissances mais on tient compte de la concentration et du domaine d'absorption UV du photoamorceur utilisé.

Ledit composé photoamorceur peut être un photoamorceur radicalaire ou un photoamorceur cationique. On peut également mettre en oeuvre un mécanisme hybride en utilisant deux photoamorceurs respectivement radicalaire et cationique. Le choix desdits photoamorceurs radicalaires ou cationiques dépend du choix des dits monomères biocides et des dits composés copopolymérisables, c'est-à-dire des groupements réactifs qu'ils comprennent selon que ces derniers sont activables par voie radicalaire ou par voie cationique. On utilisera en particulier deux photoamorceurs respectivement radicalaire et cationique lorsque la formulation comprend deux types de dits composés copolymérisables, photopolymérisables respectivement par voie radicalaire et cationique.

Dans un mode préféré de réalisation et selon une autre caractéristique de la présente invention, ledit monomère biocide comprend un monomère comportant un groupe de sels quaternaire répond à la formule (I) dans laquelle :

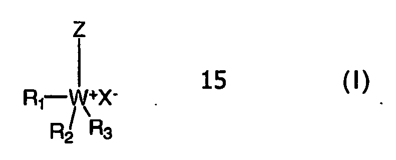

Dans laquelle :
- Z représente un reste monovalent choisi parmi
- Soit 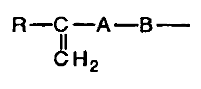
dans lequel :
R représente -H ou -CH₃
A représente : 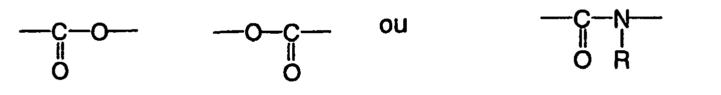
B représente une chaîne alkylène en C₁-C₅, linéaire ou ramifiée ou un groupe arylène ou arylalkylène
   - soit 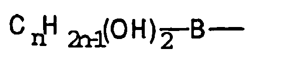
   - soit 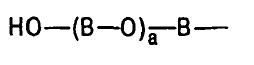
dans lesquels B a la signification donnée ci-dessus et n peut varier de 1 à 20 et a peut varier de 0 à 3.
- W⁺ représente un cation N⁺ d'azote, P⁺ de phosphore ou Q⁺ d'un hétérocycle saturé ou insaturé comprenant un atome d'azote substitué par R₃, ou directement lié à A ou à B, et pouvant également contenir en plus de l'azote quaternisé un ou plusieurs hétéro atomes, identiques ou différents
- R₁ et R₂ identiques ou différents, représentent chacun une chaîne alkyle en C₁-C₅ ou un groupe aryle
- R₃ représente une chaîne alkyle en C₃-C₂₀ ou un groupe aryle ou arylalkyle
- X⁻ représente un anion, notamment halogénure.

Ledit monomère biocide de formule (I) diffère en fonction du type de mécanisme mis en oeuvre pour la photopolymérisation.

Les monomères biocides de formule (I) ci-dessus, pour lesquels Z représente 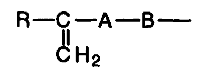 sont adaptés à une copolymérisation par photopolymérisation radicalaire et nécessitent donc la présence d'un photoamorceur radicalaire.

Les monomères biocides de formule (I) ci-dessus, pour lesquels Z représente 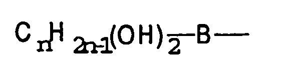 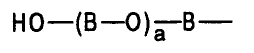 sont adaptés à une copolymérisation par photopolymérisation cationique et nécessitent donc la présence d'un photoamorceur cationique.

Pour une photopolymérisation radicalaire, on utilisera avantageusement le monomère de formule (I₁) suivant : 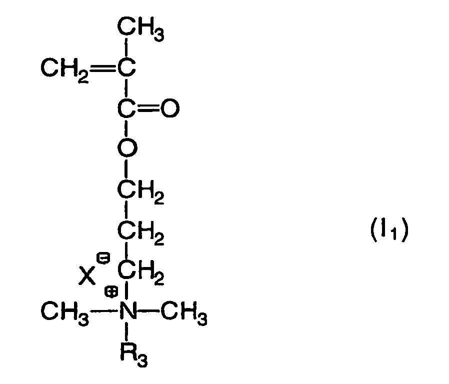 dans laquelle :
- R₃ représente une chaîne alkyle en C₈-C₁₆, un groupe aryle ou arylalkyle, et
- X⁻ représente un anion, notamment halogénure

Pour une photopolymérisation cationique, on utilisera avantageusement le monomère biocide de formule (I₂) suivante : 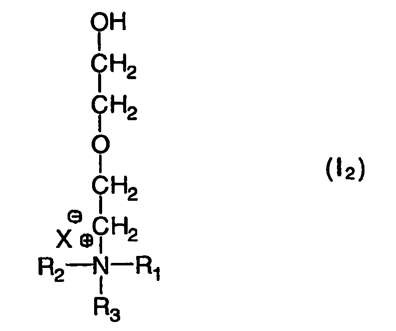 dans laquelle:
- X⁻ représente un anion,
- R₁ et R₂ identiques ou différents, représentent chacun une chaîne alkyle en C₁- C₅ ou un groupe aryle,
- R₃ représente une chaîne alkyle en C₃-C₂₀ ou un groupe aryle

Seuls les monomères de formule (I₁) sont décrits dans W098/29463.

Pour réaliser la polymérisation et le greffage sur le substrat du polymère biocide résultant de la copolymérisation dudit monomère biocide et dudit monomère ou oligomère copolymérisable, il est nécessaire d'utiliser un agent de greffage qui peut être soit un amorceur de greffage pour un greffage direct sur le substrat, soit un agent de couplage pour un greffage indirect sur le substrat. Par "amorceur de greffage" on entend un composé qui permet la création de centres actifs sur le support, centres actifs à partir desquels pourront s'établir des liaisons chimiques covalentes directes du substrat avec le polymère biocide résultant de la copolymérisation dudit monomère biocide et dudit monomère ou oligomère copolymérisable. Par "agent de couplage" on entend un composé capable d'une part, de créer un lien chimique covalent intermédiaire entre le substrat et ledit polymère biocide par réaction dudit agent de couplage sur une fonction chimique portée par le substrat et d'autre part, par polyaddition ou par polycondensation dudit agent de couplage pour former un copolymère avec lesdits monomères biocides et dits composés copolymérisables contenus dans la formulation. □

Les agents de greffage induisent donc la formation de liaisons covalentes entre le substrat et le revêtement de polymère biocide car ils sont capables soit de substituer un hydrogène du substrat, notamment les hydrogènes appartenant à un carbone tertiaire en ce qui concerne les amorceurs de greffage, soit de réagir chimiquement avec lesdits groupements fonctionnels du substrat et avec lesdits groupements fonctionnels desdits monomères et/ou dits composés polymérisables de la formulation en ce qui concerne les agents de couplage.

Ces composés «agents de greffage» peuvent appartenir aux catégories et familles suivantes :

### A. les amorceurs de greffage .

Ces amorceurs de greffage sont activables par voie exclusivement radicalaire et requièrent donc la présence d'un photoamorceur radicalaire et desdits monomères biocides et desdits composés polymérisables, photopolymérisables par voie radicalaire.

Ces dits amorceurs de greffage sont bien connus de l'homme de l'art et sont choisis, notamment, parmi les familles de composés suivantes:
1. Les composés peroxydes organiques, notamment :
   - les peroxyesters, notamment les 1-diméthyl-3-hydroxybutyl peroxydécanoate, gamma-cumyl peroxydécanoate, gamma-cumyl peroxyheptanoate, t-amyl- peroxydécanoate, 2,5-diméthyl 2,5-di(2-éthylhexanoylperoxy)hexane, t-butylperoxypivalate, t-butylperoxy-2-éthylhexanoate, t-butylperoxyacétate, t-amylperoxyacétate, t-butylperbenzoate, t-amylperbenzoate ;
   - les hydroperoxydes, notamment les hydroperoxydes de tert-butyl, amylhydroperoxyde ;
   - les peroxyacétals, notamment les 1,1-di(t-butylperoxy)-cyclohexane, 1,1-di (t-butylperoxy)-3,3,5-triméthyl-cyclohexane, 1,1-di(t-amylperoxy)-cyclohexane, éthyle-3,3-di(t-butylperoxy)-butyrate ; peroxydicarbonates comme les di(n-propyl)peroxydicarbonates, di(sec-butyl) peroxydicarbonate et di(2-éthylhexyl)peroxydicarbonate ;
   - les diacylperoxydes, notamment les peroxyde de benzoyle, peroxyde d'urée, peroxyde de lauroyle, peroxyde de décanoyle ;
2. Les peroxydes inorganiques, notamment les persulfate de potassium, persulfate d'ammonium et peroxyde d'hydrogène ;
3. Les composés peroxydes organiques ou inorganiques cités ci-dessus, utilisés en mélange avec :
   - soit des composés choisis parmi les sels de Ag⁺, V²⁺, Ti²⁺, Co²⁺, Cu⁺, Fe²⁺, Ce²⁺, Na⁺ et K⁺, et notamment :
      - des nitrate, acétate, sulfate, carbonate, perchlorate de Ag⁺, V²⁺, Ti²⁺, Co²⁺, Ce²⁺, Cu⁺, Fe²⁺, ou
      - des sulfite, hydrosulfite, bisulfite, métabisulfite, thiosulfate, sulfure de sodium ou potassium,
   - soit des composés organiques réducteurs, notamment les glucose, lévulose, sorbose, hydrazine, hydroxylamine, amine, alcool, diamine tertiaire, mercaptan, composés organométaliques.
4. Les sels de cérium Ce⁴⁺ ou de vanadium V⁵⁺, c'est-à-dire dans l'état d'oxydation maximale, notamment des sels d'ammonium, nitrate ou sulfate de cérium ou vanadium, qui agissent tels quels sur des substrats ayant des fonctions hydroxyle ou amine, en favorisant la formation des centres actifs.
5. Les amorceurs azoïques consistant en des dérivés de composés azoïques choisis parmi des diazoaminodérivés, diazothiodérivés, tetrazines, diazohydrates et diazoacétates, et plus particulièrement: azo-bis-isobutyronitrile, azobiscumène, azo-bisiso-1,1,1-tricyclopropylméthane, 4-nitrophényl-azo-triphényleméthane et phényl-azo-triphénylméthane, cette liste n'étant pas exhaustive.

### B. Les agents de couplage

Les agents de couplage agissent en créant des liaisons chimiques entre le substrat et le revêtement dedit polymère biocide.

Ces agents de couplage peuvent être mis en oeuvre dans des réactions de photopolymérisation par voie radicalaire ou par voie cationique en fonction des groupements réactifs qu'ils comportent. Toutefois, ils sont plus particulièrement employés là où l'utilisation d'amorceurs de greffage par voie radicalaire n'est pas possible ou difficilement réalisable, notamment en fonction de la nature du substrat, et plus particulièrement encore pour des substrats difficiles à greffer directement comme les substrats en matériau céramique, verre et/ou métaux.

Les agents de couplage se classent principalement dans les deux catégories distinctes :
1. Les agents de couplage de type silane comportant (a) des groupements réactifs copolymérisables avec desdits monomères biocides et desdits composés copolymérisables, c'est-à-dire par voie radicalaire ou par voie cationique, et (b) des groupements réactifs permettant la liaison covalente avec des groupements dudit substrat.
   Ils peuvent répondre plus particulièrement à la formule générale (A) :

   R'ₙSiX' (₄₋ₙ) (A)

   dans laquelle :
   - R' est un radical organique photopolymérisable par voie radicalaire ou par voie cationique, notamment les groupements vinyle et méthacryloyle (vinyltriéthoxysilane, vinyltriméthoxysilane, 3-méthacryloxypropyltriméthoxysilane, méthacryloxydécyltriéthoxysilane) pour photopolymérisation par voie radicalaire ou les groupements époxy, (β-(3,4-époxycyclohexyl)éthyl-triméthoxysilane, γ-glycidoxypropyltriméthoxysilane) et mercapto (3-mercaptopropyltriméthoxysilane) pour photopolymérisation par voie cationique, et
   - X' est un groupement hydroxyle ou un autre groupement facilement hydrolysable, notamment un groupement méthoxy, éthoxy ou chlorure, de façon à permettre la liaison chimique avec le substrat.

   Ces agents de couplage de type silane sont plus particulièrement intéressants pour des substrats comportant des groupes hydroxyles comme le verre, les céramiques mais aussi certains matériaux à base de polysaccharide ou de polymère synthétique.
2. Les agents de couplage organométalliques:
   - comme les titanates tels que i-propoxy titanium tristéarate, titanium tetrastéarate, i-propoxy titanium trilaurate, isopropyl tri(dioctylphosphate) titanate, isopropyl tris(dodécyl benzène) sulfonyl titanate, néo-alkoxy tris [dioctylpyrophosphate]titanate,
   - les phosphates tels que (éthyl-),(butyl-), (hexyl-), (octyl-), (3,7-diméthyl-6-octenyl-), (2-(méthacryloyoxy)isopropyl-), (6-(mercaptohexyl)-), (6-chlorohexyl-) phosphates,
   - les zirconates tels que i-propoxy zirconium tristéarate, zirconium tétrastéarate, i-propoxy zirconium trilaurate, néo-alkoxy tris [dodécyl benzène sulfonyl]zirconate,
   - les chromates, les aluminates, les zirco-aluminates, les sels de cobalt, cette liste n'étant pas exhaustive.

L'utilisation des agents de greffage selon l'invention conduit à une augmentation importante du degré de greffage, la radiation UV ne suffisant pas pour former un nombre suffisant de centres actifs en surface. Le taux d'agent de greffage nécessaire pour conduire à un accrochage efficace peut varier entre 0.01 et 10%.

Ledit composé copolymérisable doit comporter des groupements réactifs permettant, d'une part, la copolymérisation avec ledit monomère biocide, notamment d'ammonium quaternaire, et, d'autre part, la fixation covalente sur le substrat, grâce aux dits agents de greffage.

Lesdits composés copolymérisables ne possédant qu'une seule fonction, par exemple acrylique, ne réticulent pas, ils polymérisent en donnant des chaînes linéaires et des copolymères solubles, tandis que les composés bi ou pluri fonctionnels conduisent à la formation d'un réseau réticulé tridimensionnel et insoluble dudit copolymère biocide greffé obtenu.

La mise en oeuvre d'un copolymère réticulé selon la présente invention, permet notamment d'obtenir des épaisseurs de revêtement plus importantes ainsi que d'autres avantages tels que des propriétés améliorées de résistance au agents chimiques, des caractéristiques mécaniques meilleures, notamment en terme de dureté et résistance à l'abrasion, un meilleur comportement aux conditions d'environnement telles que humidité, variation de température, résistance à la dégradation thermique et photochimique.

De préférence donc, selon la présente invention, ladite formulation comporte au moins un composé copolymérisable bi ou pluri fonctionnel permettant d'obtenir la photopolymérisation et greffage d'un dit copolymère biocide réticulé.

Dans un mode de réalisation avantageux, ledit composé copolymérisable comprend un monomère ou oligomère acrylate mono (n₁ = 1) ou pluri (n₁= 2 à 6) fonctionnels de formule (II) 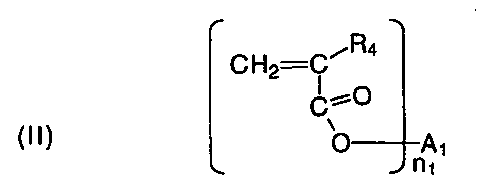 dans laquelle A₁ est un reste organique,
R₄ est un hydrogène ou un méthyl, et
n₁ est un nombre entier de 1 à 6.

On peut citer plus particulièrement les monomères ou oligomères acrylates choisis parmi les composés suivants : méthyl-acrylate, méthylméthacrylate, éthylacrylate, iso-propylméthacrylate, n- hexylacrylate, stéarylacrylate, allylacrylate, glycérol triacrylate, éthylène glycol diacrylate, diéthylène glycoldiacrylate, triéthylène glycol diméthacrylate, 1,3-propanediol diacrylate, 1,3-propanediol diméthacrylate, triméthylole propane triacrylate, 1,2,4-butanetriol triméthacrylate, 1,4-cyclohexanediol diacrylate, pentaérithrytol triacrylate, pentaérithrytol tétraacrylate, pentaérithrytol tétraméthacrylate, sorbitol hexaacrylate bis [1-(2-acryloxy)]-p-éthoxyphénylediméthyleméthane, bis[1-(3-acryloxy-2-hydroxy)]-p-propoxyphenylméthane, des bis- acrylate et bisméthacrylate de polyéthylène glycol de masse molaire 200-500, les mélanges copolymérisables des monomères décrits ci-dessus et des oligomères acrylates suivants: polyétheracrylates modifiés et amine, polyuréthane acrylate, polyester acrylate, polyéther acrylate, acrylate multifonctionnel modifié en amine, polyester hexaacrylate modifié en acide gras, polyester tétraacrylate, polyester méthacrylate fonctionnalisé en acide, polyester acrylate hexafonctionnel, polyester acrylate hexafonctionnel modifié en acide gras, uréthane diacrylate aliphatique, uréthane triacrylate aliphatique, uréthane acrylate aliphatique hexafonctionnel, silicone acrylate.

De préférence, selon la présente invention, une formulation comportera plus particulièrement au moins un composé au moins bi fonctionnel de formule (II).

Ces dits composés copolymérisables de type acrylate de formule (II) requièrent une copolymérisation par photopolymérisation par voie radicalaire et requièrent donc la présence de photoamorceurs radicalaires dans la formulation.

Selon un autre mode de réalisation du procédé selon l'invention, ledit composé polymérisable comprend un monomère ou oligomère époxyde mono (n₂=1), di (n₂ = 2) ou tri (n₂ = 3) fonctionnel répondant à la formule générale (III) suivante :

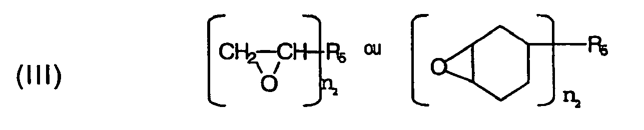

### Dans laquelle n₂ est un nombre entier de 1 à 3, et

R₅ est un reste d'un radical organique.

On peut citer plus particulièrement les époxydes choisis parmi les composés suivants : 3,4-époxycyclohexylméthyl-3,4-époxycyclohexane carboxylate (Cyracure UVR 6105 et 6110 de Union Carbide Corp.), 3,4-époxy-6-méthylcyclohexylméthyl-3,4-époxy-6-méthylcyclohexène carboxylate (ERL-4221), bis(3,4-époxy-6-méthylcyclohexylméthyl)adipate (Cyracure® UVR 6128 de Union Carbide Corp.), octadécylène oxyde, épichorhydrine, styrène oxyde, vinylcyclohexène oxyde, glycidol, glycidyl méthacrylate, diglycidyl éther de bisphénol A (EPON® 828, 825, 1004 et 1010 de Shell Chemical Co ), vinylcyclohexène dioxyde (ERL-4206 de Union Carbide Corp.), bis (2,3-époxycyclopentyl éther)(ERL-0400 de Union Carbide Corp), polypropylène glycol modifié avec époxy (ERL 4050 et ERL-4052 de Union Carbide Corp.), dipentène dioxyde (ERL-4269), polybutadiène époxyde (Oxiron 2001 de FMC Corp.), résine siliconée contenant époxy, résine époxy ignifugée (Dow Chemical Co.), 1,4-butanediol diglycidyl éther de phénolformaldéhyde novolac (DEN-431 et DEN 438 de Dow Chemical Co.), vinylcyclohexène monoxyde 1,2-époxyhexadécane (UVR-6216 de Union Carbide Corp.), des alkyl (C₈-C₁₂) glycidyl éthers (HELOXY Modifier 7 et 8, Shell Chemical Co.), diglycidyl éther de 1,4-butanediol, diglycidyl éther de néopentyl glycol, (HELOXY Modifier 68), diglycidyl éther de cyclohexane diméthanol, triméthylol éthane triglycidyl éther, triméthylol propane triglycidyl éther, polyglycidyl éther d'un polyol aliphatique, polyglycol diépoxyde (HELOXY Modifier 67, 68, 107, 44, 48, 84 et respectivement 32 de Shell Chemical Co), bisphénol F diépoxydes (EPN-1138 et GY-281 de Ciba-Geigy Corp.), et des glycidyl acrylates et méthacrylates.

Selon un autre mode de réalisation, ledit composé copolymérisable comprend un monomère ou oligomère de vinyléther répondant à la formule générale (IV) suivante : 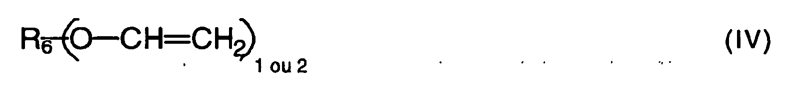 dans laquelle R₆ est un reste d'un dérivé organique

On peut citer plus particulièrement les vinyléthers choisis parmi les composés suivants : les : cyclohexanediméthanol divinyléther, diéthylaminoéthylvinyléther, tétraéthylèneglycol divinyléther, triéthylèneglycol divinyléther, cyclohexane diméthanol vinyléther, cyclohexyl vinyléther, n-dodécyl vinyléther, lauryl vinyléther, triéthylèneglycol divinyléther, 4-hydroxybutylvinyléther.

De préférence, selon la présente invention, ladite formulation comporte plus particulièrement au moins un composé copolymérisable au moins bi fonctionnel de type époxyde de formule (III) ou de type vinyléther de formule (IV)

Lesdits composés copolymérisables de type époxyde de formule (III), ou vinyléther de formule (IV) ci-dessus, requièrent des mécanismes de photopolymérisation par voie cationique et donc la présence de photoamorceurs cationiques.

Dans une variante de réalisation, ledit photoamorceur comprend un photoamorceur radicalaire comprenant un composé organique contenant au moins un cycle phényl substitué par un groupe carbonyle, azoté ou soufré.

Plus particulièrement, ledit photoamorceur comprend un photoamorceur radicalaire comprenant au moins un composé organique contenant dans la molécule des liaisons chimiques capables de se rompre de façon homolytique sous rayonnement UV, et au moins un cycle phényl substitué par un groupe carbonyle, phosphoré, azoté ou soufré.

Plus particulièrement encore, on peut citer les photoamorceurs radicalaires choisis parmi les composés suivants :
1-hydroxy-cyclohexyl-phényl-cétone, benzophénone, 2-hydroxy-2-méthyl- 1-phényl-1-propanone, méthylbenzoylformate, α,α-diméthoxy- α-phénylacétophénone, 2-benzyl-2-(diméthylamino)-1-[4-(4-morpholinyl)phényl]-1-butanone, 2-méthyl-1-[4-(méthylthio)phényl]-2-(4-morpholinyl)-1-propanone, diphényl (2,4,6-triméthylbenzoyl)-phosphine oxyde, phosphine oxyde, phényl bis (2,4,6-triméthyl benzoyle)-phosphine oxyde, phosphine oxyde, phényl bis(2,4,6-triméthyl benzoyle).

Les composés ci-dessus sont commercialisés par la société Ciba Specialty Chemicals Inc. sous les références suivantes : Irgacure® 184, 500, 1000, 2959, 651, 369, 907, 1300, 819, 819DW, 2005, 2010, 2020, Darocur® 1173, MBF, TPO, et 4265.

Dans une autre variante de réalisation, le ledit photoamorceur comprend un photoamorceur cationique comprenant des composés ioniques contenant des cations organiques comme des composés aryle sulfonium ou aryle iodonium avec des contreions tels que SbF₆ ⁻, PF₆⁻, AsF₆⁻, BF₄⁻, PO₄' capables d'attaquer de manière électrophile ledit monomère biocide ou ledit composé copolymérisable, en créant des espèces cationiques capables ultérieurement de poursuivre la polymérisation.

Plus particulièrement, ledit photoamorceur cationique est un sel d'aryle sulfonium, notamment les triaryle sulfonium phosphate, triarylsulfonium antimonate, triarylsulfonium hexafluorophosphate, (UVI 6974, UVI 6992), ou un sel d'aryle iodonium comme les diaryliodonium hexafluoroantimonate, bisdodécylphényliodonium hexafluoroantimonate, iodonium, (4-méthylphényl)[4-(2-méthylpropyl)phényl]-hexafluorophosphate (1-) (CGI 552) commercialisés par Ciba^{®} Specialty Chemicals ou par Union Carbide Corporation.

Les concentrations des composés de la formulation utilisée peuvent varier dans des limites assez importantes en fonction des propriétés physico-chimiques, mécaniques et bactériologiques qu'on souhaite obtenir.

Dans un mode préféré de réalisation, ladite formulation comprend ses différents composants dans les proportions pondérales suivantes pour un total de 100%, à savoir :
1) 5 à 95%, de préférence 5 à 50%, de dits monomères biocides,
2) 5 à 95%, de préférence 10 à 75%, de dits composés copolymérisables,
3) 1 à 10% de dits photoamorceurs, et
4) 0,01 à 10% de dits agents de greffage

Selon une autre caractéristique subsidiaire de la présente invention, ladite formulation comprend des composants additifs choisis parmi :
- un composé ayant des fonctions hydroxyles,
- un autre composé polymérisable du type anhydride ou des dérivés, du type styrène ou ses dérivés ou de type cyanoacrylate,
- un additif choisi parmi des agents assouplissant, stabilisant, d'étalement, ignifugeant, colorant, plastifiant, améliorateur de toucher, agents d'adhésion.
- des solvants, réactifs ou non, utilisés notamment pour diminuer la viscosité.

Ces composants ou additifs sont bien connus de l'homme de l'art.

On cite plus particulièrement les composants additifs suivants :
- Comme solvant réactif ou pas, un des monomères acrylates ou méthacrylates répondant à la formule générale (II), alcools, eau ou autres solvants.
- Comme composants ayant des fonctions hydroxyle, les alcools, monoalkyl éthers de polyoxyalkylène glycols, monoalkyl éthers d'alkylène glycols, 1,2-éthanediol, 1,3-propanediols, 1,4-butanediol, 1,6-hexanediol, 1,8-octanediol, 2-éthyle-1,6-hexanédiol, bis (hydroxyméthyl) cyclohexane, 1,18-dihydroxyoctadécane, 3-chloro-1,2-propanediol, polyhydroxyalkanes (glycérine, triméthyloléthane, pentaérithritol, sorbitol) et des polymères contenant des hydroxyles comme polyoxyéthylène et polyoxypropylène di- ou triols, polytétrahydrofurane, copolymères de hydroxypropyl et hydroxyéthyl acrylates et méthacrylates et autres monomères polymérisables par voie radicalaire, copolymères contenant des groupements hydroxyle pendants formés par hydrolyse, résines polyvinyl acétal avec OH pendants, polymères cellulosiques modifiés, polyesters, polylactones, polycaprolactones, polyalkadiènes présentant un groupement hydroxyle en bout de chaîne,
- Comme autres composés polymérisables, des adhésifs cyanoacrylates: le 3,3'-(1,4-phénylène)bis(2-cyanoacrylate) de diéthyle , le 3-(3-chloro-4-méthoxyphényl)-2-cyanoacrylate d'éthyle, le 2-cyanoacrylate d'éthyle, le 3-(5-(2-chloro-5-(trifluorométhyl)phényle)-2-furyl)-2-cyanoacrylate d'éthyle, le 3-(5-(2-chlorophényl)-2-furyl)-2-cyanoacrylate d'éthyle, le 3-(5-(3-chlorophényl)-2-furyl)-2-cyanoacrylate d'éthyle, le 3-(5-(4-chlorophényl)-2-furyl)-2-cyanoacrylate d'éthyle, le 3-(5-bromo-2-furyl)-2-cyanoacrylate, le 3-(5-(4-(aminosulfonyl)phényl)-2-furyl)-2-cyanoacrylate ; des anhydrides : l'anhydride 2,3-dibromomaléique, l'anhydride maléique, l'anhydride 2-éthyl-3-propytacrylique; des dérivés de styrène: le styrène, l'α-méthylstyrène, le divinyl benzène.

Dans une variante de réalisation du procédé selon l'invention, ladite formulation comprend :
- au moins un dit amorceur de greffage comprenant de préférence un composé peroxyde organique ou un sel de cérium Ce⁴⁺, et
- au moins un dit photoamorceur radicalaire.

Selon une autre variante de réalisation du procédé selon l'invention, ladite formulation comprend :
- au moins un dit photoamorceur cationique ou radicalaire, et
- au moins un dit agent de couplage de type silane.

Cette seconde variante de revendication est plus particulièrement appropriée pour un greffage sur des substrats comprenant des fonctions hydroxyles.

La présente invention a également pour objet un substrat solide comportant un polymère présentant des propriétés biocides, greffé à sa surface, obtenu par le procédé selon l'invention.

Dans un mode de réalisation, ledit substrat solide est constitué d'un matériau organique naturel ou synthétique, de préférence de matériau de type plastique, un matériau à base de polymère naturel tel que des polysaccharides.

Plus particulièrement encore, ledit substrat est choisi parmi des matériaux organiques fibreux textiles ou non tissés, réalisés à base de fils ou fibres synthétiques ou naturelles.

Dans un autre mode de réalisation, ledit substrat solide est constitué d'un matériau inorganique, de préférence un matériau céramique ou du verre ou encore un métal.

Les agents de greffage peuvent être choisis en fonction du type de substrat :
- Pour des substrats ayant des fonctions hydroxyles (verre, cellulose, bois), on peut utiliser, comme dits agents de greffage, lesdits amorceurs de greffages comme les sels métalliques, notamment les sels de cérium si la formulation contient un photoamorceur radicalaire, ou desdits agents de couplage si la formulation comprend des photoamorceurs cationiques et des composants impliquant une photopolymérisation cationique, notamment des agents de couplages comme les composés de type silane.
- Pour le greffage sur des substrats en polyester, polyuréthane, cellophane, polyéthylène et polypropylène, on peut d'utiliser un amorceur de greffage comme un couple azotate d'argent/ peroxyde d'urée ou persulfate d'ammonium.
- Pour les polymères hydrophiles comme les poly(alcool vinylique), poly(hydroxyéthylméthacrylate), poly(acide acrylique), poly(vinylpyrrolidone), poly(aklylène glycols) et gélatine, on peut utiliser des amorceurs de greffage comme les peroxydes, persulfates, des couples redox oxydant/réducteur ou des agents de couplage comme les composés de type silane.
- Pour les substrats comme les copolymères éthylènvinylacétate, copolymères éthylènéthyle acrylate, on peut utiliser, comme amorceurs de greffage, les peroxyde de benzoyle, tert-butylhydroperoxyde, méthyléthylcétone peroxyde et sulfate ferreux d'ammonium. En règle générale, les agents de greffage doivent être peu solubles dans la formulation photo polymérisable, et en même temps ils doivent avoir une bonne affinité envers les substrats utilisés, pour favoriser le greffage et diminuer la vitesse du processus d'homopolymérisation.
- Pour des substrats composites comportant des matériaux de nature différente comme du gel-coat à base de résine de copolymère polyester/styrène chargée en silice , on peut avantageusement utiliser conjointement les deux types d'agents de greffage, à savoir un agent de couplage et un amorceur de greffage.

Le type d'agents de greffage dépend aussi de la formulation. Si on utilise une formulation aqueuse, on utilisera des agents de greffage hydrosolubles et, si on utilise des formulations non aqueuses, on préfèrera utiliser des peroxydes ou de couples redox solubles dans les produits organiques. Dans tous les cas, les agents de greffage doivent avoir une bonne compatibilité avec le substrat à greffer.

D'autres caractéristiques et avantages de la présente invention apparaîtront à la lumière des exemples détaillés de réalisation qui vont suivre.

### Exemple 1 : Synthèse de monomères biocides

### 1.1 Synthèse du bromure de méthacryloyléthyldiméthyloctylammonium

4.71g (0.03 moles) de diméthylaminoéthylméthacrylate et 5.79 g (0.03 moles) de bromure d'octyle sont ajoutés à 10 ml d'éthanol. La solution est ensuite agitée dans un bain d'huile, à 60°C, pendant 48 heures. Le dosage des ions Br- prouve qu'après ce temps de réaction la conversion atteinte est de 99%. Ce mélange est ensuite refroidi à la température ambiante et précipité dans l'éther éthylique. Le précipitât obtenu est ensuite filtré et lavé plusieurs fois avec de l'éther.

Le schéma réactionnel de la réaction est le suivant :

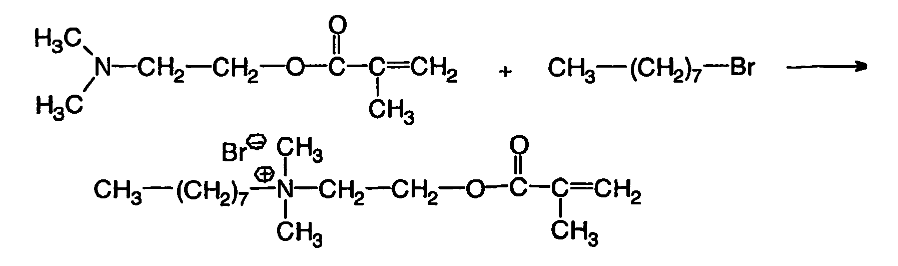

### 1.2 Synthèse de l'iodure de méthacryloyléthyldiméthyoctylammonium

4.71g (0.03 moles) de diméthylaminoéthylméthacrylate et 7.2 g (0.03 moles) d'iodure d'octyle sont ajoutés à 10 ml d'éthanol. La solution est ensuite agitée dans un bain d'huile, à 60°C, pendant 48 heures. Le dosage des ions I⁻ prouve qu'après ce temps de réaction la conversion atteinte est de 99.1%. Ce mélange est ensuite refroidi à la température ambiante et précipité dans l'éther éthylique. Le précipitât obtenu est ensuite filtré et lavé plusieurs fois avec de l'éther.

### 1.3 Quaternisation du dimétylaminopropylméthacrylamide par le bromure de décyle

4.68 g de diméthylaminopropylméthacrylamide et 6.63 g de bromure de décyle sont dissous dans 10-15 ml d'éthanol et le mélange est maintenu pendant 72 heures à 60°C sous forte agitation. Par dosage des ions Br⁻ on détermine le rendement de réaction qui est d'environ 98%, considéré comme satisfaisant. Le solvant est ensuite enlevé à l'aide d'un rotavapeur et le sel quaternaire obtenu est un liquide visqueux jaunâtre qui peut être utilisé tel quel dans les formulations.

En respectant la même manière de travail, on a synthétisé aussi des sels quaternaires en utilisant les bromures et les iodures d'octyle, décyle, dodécyle, tetradécyle et hexadécyle.

### 1.4 Synthèse d'autres sels quaternaires de diméthylaminoéthylméthacrylate. Changement de contre ions.

A une solution de 0.5 mole de bromure de méthacryloyléthyldiméthyhexadécylammonium dans 0.5 l d'alcool isopropylique, on ajoute 0.5 mole de salicylate de sodium, dissout aussi dans 0.5 l d'alcool isopropylique. La deuxième solution est introduite dans la première goutte à goutte. Le mélange est agité pendant qu'on augmente la température à 60°C. La température est maintenue constante pendant 8 heures. Le mélange obtenu est ensuite refroidi à la température ambiante, puis filtré. On enlève par distillation à pression réduite les 2/3 du solvant et on ajoute une quantité égale d'eau. Le sel est ensuite cristallisé dans un bain de glace, puis filtré.

De la même manière on peut synthétiser d'autres sels d'ammonium quaternaires avec divers contre ions, tel que benzoate, acétate, undécylénate, acétyle ou salicylate. Le solvant peut être remplacé par un autre solvant polaire ou un mélange de solvants, en fonction du sel organique utilisé pour la quaternisation (mélange eau/alcool, acétone/benzène, chloroforme/benzène)

### 1.5 Quaternisation du 2[2-(diméthylamino)éthoxy]éthanol par le bromure de dodécyle.

Dans un ballon bicol de 250 ml équipé d'un réfrigérant, sont introduits 54 g de 2[2-(diméthylamino)éthoxy]éthanol et 99,7 g de bromure de dodécyle. La solution est homogénéisée à l'aide d'un agitateur magnétique, dans un bain d'huile. On chauffe à 64°C, pendant 21 heures. La conversion atteinte est de 99%. En refroidissant, on obtient un produit solide de couleur légèrement jaunâtre.

### 1.6 Quaternisation du didécylméthylamine par le 3-chloro-1,2-propanediol.

1 mole de didécylméthylamine réagit avec 1 mole de 3-chloro-1,2-propanediole dans du nitrométhane au reflux, en agitant pendant 60 heures. Le solvant est ensuite éliminé en utilisant le rota vapeur, sous vide. Le sel quaternaire se présente comme un résidu jaune brun très visqueux.

### 1.7 Quaternisation du trioctylphosphine par le chlorure de méthylstyrène

La réaction a été effectuée en masse. Dans 10.49 g de trioctylphosphine (0.028 moles) on ajoute 4.31 g (0.028 moles) de chlorure de méthylstyrène. Le mélange est agité pendant 5 heures à 50°C, à l'aide d'un agitateur magnétique. Le sel quaternaire commence à se former après une heure, et se présente comme un précipitât jaune.

### 1.8 Quaternisation du trioctylphosphine par le 3-chloro-1 ,2-propanediol.

La réaction a été effectuée en masse. Dans 7.4 g de trioctylphosphine (0.02 moles) on ajoute 2.22 g (0.02 moles) de 3-chloro-1 ,2-propanediol. Le mélange est agité pendant 92 heures à 130°C, à l'aide d'un agitateur magnétique. Le système biphasique devient homogène et l'analyse coulométrique révèle un rendement de quaternisation de 96.4%. Le sel quaternaire formé se présente comme un liquide incolore visqueux.

### Exemple 2 : Photopolymérisation et greffage sur un substrat

Pour réaliser la photopolymérisation des formulations décrites ci-dessous, on a utilisé à l'échelle du laboratoire un appareil Novacure^{®} N 2001-A1 de EFOS, contenant une lampe à vapeurs de mercure de 100 W et un filtre permettant l'élimination des radiations IR et l'irradiation de l'échantillon à une longueur d'onde de 360-500 nm. L'appareil est muni d'un guide de lumière à double tête ayant le diamètre de 3 mm. Pour suivre le processus de photopolymérisation en temps réel, mesurer l'enthalpie de réaction et déterminer le temps d'induction, l'appareil Novacure^{®} peut être couplé à un DSC Pyris^{®} 1 commercialisé par Perkin Elmer. Pour la photopolymérisation effectuée sur des échantillons de dimensions plus importantes on a utilisé un appareillage Fusion UVF-300 avec convoyeur.

### 2.1 Greffage sur des tissus à base de coton ou de mélange de polyester/coton

On a réalisé le greffage de monomères biocides de deux manières différentes.

### 2.1.1. Traitement en une étape

On prépare une solution contenant 15% de monomère biocide non saturé, 5% dedit composé copolymérisable (par exemple polyéthylène glycol diacrylate), 0.5% d'amorceur de greffage Ce(NO₃)₆(NH₄)₂ (nitrate de cérium ammoniacal), et 5% de photoamorceur radicalaire Irgacure^{®} DW819 (bis(2,4,6-triméthylbenzoyl)-phénylphosphine oxyde), 40% d'eau déminéralisée et 34.5% d'éthanol. Un échantillon de tissu ayant les dimensions de 2x2 cm est trempé dans 0.5 g de cette solution. Après imprégnation il est irradié 10 secondes de chaque côté à une intensité lumineuse de 200 mW/cm² avec une lampe UV émettant dans la région spectrale 280-500 nm et séché pendant 10 minutes à l'étuve à 100°C. La méthode peut être appliquée industriellement en imprégnant le textile par la méthode de foulardage. En fonction du contenu en coton du tissu, la quantité de formulation absorbée est comprise entre 80-180g/cm² (80g/cm² pour les mélanges PE/coton et 180g/cm² pour le coton pur). Le textile passe ensuite entre deux sources UV à une intensité de 100 à 1000 mW/cm², variant en fonction de la réactivité des composants, émettant dans la région spectrale 280 - 500 nm, à une vitesse de 10-40 m/min et séché dans un tunnel de fours aux températures comprises entre 100-180°C. La réaction commence par la décomposition UV du photoamorceur, suivie de la photopolymérisation et est achevée thermiquement lors du passage dans le tunnel de fours.

### 2.1.2. traitement en deux étapes

A échelle du laboratoire, un échantillon de tissu de 2x2 cm est trempé dans 0.5 g de solution comportant 5% de photoamorceur radicalaire Irgacure^{®} DW819 (bis(2,4,6-triméthylbenzoyl)-phénylphosphine oxyde) et 0.5 % d'amorceur de greffage Ce(NO₃)₆(NH₄)₂ dans l'eau. Il est ensuite séché à l'étuve pendant 10 minutes à 100°C, puis trempé dans une deuxième solution contenant 15 % de monomère biocide non saturé, 5% de polyéthylèneglycoldiacrylate, 45 % d'eau et 35 % d'éthanol. Il est ensuite irradié 10 secondes de chaque côté à une intensité lumineuse de 200 mW/cm² avec une lampe UV émettant dans la région spectrale 280 - 500 nm et puis séché à l'étuve à 100°C.

A l'échelle industrielle, le textile est d'abord imprégné avec une solution contenant le photoamorceur Darocur^{®} DW819 (bis(2,4,6-triméthylbenzoyl)-phénylphosphine oxyde) et l'amorceur de greffage Ce(NO₃)₆(NH₄)₂ dans l'eau, et séché à 100-180°C. Ensuite le tissu sec contenant du photoamorceur est passé dans la deuxième solution contenant le monomère biocide et éventuellement d'autres composés. En fonction du contenu en coton du tissu, la quantité de formulation absorbée est comprise entre 80-180 g/cm². Le textile est irradié ensuite entre deux sources UV avec une intensité 100 à 1000 mW/cm²- variant en fonction de la réactivité des composants et émettant dans la région spectrale 360 - 500 nm, à une vitesse de 10 à 40-m/min et séché dans un tunnel de fours aux températures comprises entre 100-180°C.

La formulation utilisée pour traiter les tissus, ponctuellement, peut contenir d'autres adjuvants comme :
- des assouplissants tels une émulsion de polysiloxane fonctionnel,
- des apprêts tels qu'une dispersion de polyacétate de vinyle,
- des agents ignifugeants tels qu'une émulsion de résine fluorocarbonée, et
- des améliorateurs de toucher et de volume tels qu'une émulsion de copolymères acryliques.

### 2.1.3. Efficacité du greffage

Après un lavage effectué à l'éthanol (pour enlever l'homopolymère) pendant 1 heure, à 60°C, l'analyse par rayons X rétrodiffusés couplée à la microscopie électronique à balayage, effectuée sur une fibre révèle un contenu de 6,57% en poids de brome. La présence d'ions bromure (contreions) prouve indirectement la présence de cations ammonium quaternaires en surface.

Pour prouver l'efficacité du greffage par le monomère bactéricide, un échantillon de tissu coton (80%) / polyester (20%) est trempé dans la deuxième étape de traitement avec une solution contenant seulement le monomère ammonium quaternaire, sans agent de réticulation. Un exemple (1) de traitement effectué conformément à ce principe est le suivant : un échantillon 2x2 cm de textile est trempé dans une première étape dans 0.5g de solution comprenant 5% de bis(2,4,6-triméthylbenzoyl)-phénylphosphine oxyde (Irgacure DW819), 0.5% de Ce(NO₃)₆(NH₄)₂ et 94.5% d'eau. Après ce temps, l'échantillon est séché à 100°C, puis trempé dans une deuxième solution contenant 20% de monomère ammonium quaternaire dans l'eau. Après irradiation UV, il est séché à 100°C, pendant 10 minutes et lavé à l'éthanol pendant 1 heure, à 60°C, pour enlever l'homopolymère formé. On prouve l'existence de l'homopolymère greffé en surface puisque l'analyse effectuée par rayons X révèle un pourcentage pondéral en bromure et donc en d'ammonium quaternaire de 3.75%. Dans un autre exemple (2) où la formulation ne comporte pas d'amorceur de greffage, le taux mesuré d'ions brome est seulement de 0.3% en poids.

Une autre preuve du greffage par le monomère bactéricide est apportée par la spectroscopie IRTF (Spectrum One de Perkin Elmer^{®}), en mode ATR (Réflectance Totale Atténuée). Dans l'exemple 1) après lavage à l'éthanol on observe une bande caractéristique des groupements méthylène à 2950-2850 cm⁻¹ attribuée au groupement R₃ porté par l'ammonium quaternaire de l'homopolymère greffé, beaucoup plus intense que dans l'exemple 2.

Une autre preuve apportée à l'efficacité du greffage du tissu est obtenue en analysant les échantillons par analyse thermogravimétrique, sous azote, en utilisant un appareil Pyris 1 ATG (Perkin Elmer^{®}). Le programme thermique est le suivant : isotherme pendant 1 minute à 40°C, suivie de chauffage de 40°C à 500°C à une vitesse de 20°C/min.

Le logiciel d'interprétation des données permet la détermination des valeurs de température de début de décomposition thermique du substrat T₀ pour chacun des composés du tissu non traités (441°C pour le polyester et 380°C pour le coton). Après le greffage du coton avec la formulation bactéricide par le procédé en deux étapes, suivi de lavage, on observe un déplacement du pic correspondant au coton vers des températures inférieures (valeur Tₒ égale à 332°C, inférieure à celle du coton non modifié), fait qui constitue une preuve de la modification chimique de celui-ci. Par contre, le traitement effectué dans les mêmes conditions, mais sans amorceur de greffage et presque inefficace, puisque la température Tₒ est très proche de celle du coton soit 375°C.

Un autre essai comporte la détermination du contenu en bromure pour un échantillon de tissu (coton/polyester 80%/20%) traité bactéricide en une seule étape. Une pièce de tissu de 2x2 cm est trempée dans 0.5 g de solution contenant 20% de méthacryloyléthyldiméthyltetradécyle ammonium bromure, 0.5% de nitrate de cérium ammoniacal et 5% de bis(2,4,6-triméthylbenzoyl)-phénylphosphine oxyde (Irgacure DW819) dans 74.5 % d'eau. Après irradiation UV pendant 10 secondes de chaque côté, l'échantillon est séché à 100°C pendant 5 minutes, puis lavé à l'éthanol pendant 1 heure, à 60°C. L'analyse par rayons X de l'échantillon révèle un faible contenu massique d'ions brome, environ 0.6%. Cet essai prouve que le traitement du textile effectué en deux étapes est beaucoup plus efficace que celui réalisé en une seule étape.

Là encore, la spectroscopie IRTF confirme le taux important de greffage dans le cas du procédé en deux étapes.

L'analyse ATG effectuée dans le cas de l'échantillon traité en une seule étape conduit a l'obtention d'une température Tₒ égale à 343°C, tandis que pour celui greffé dans deux étapes, cette valeur est inférieure, à savoir de 332°C. Lorsque le taux de greffage augmente, cette température Tₒ diminue.

Le mécanisme général d'activation de la cellulose par les sels de cérium est décrit ci-dessous :

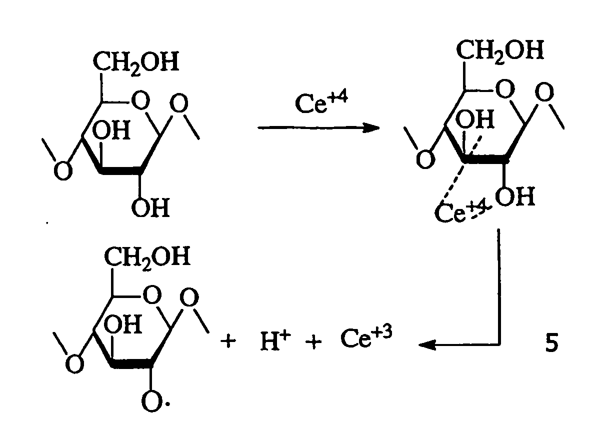

Les centres actifs formés en surface constituent les sites où se forment les greffons obtenus à partir de méthacryloyléthyldiméthyltetradécyle ammonium bromure et le polyéthylèneglycoldiacrylate, par exemple. 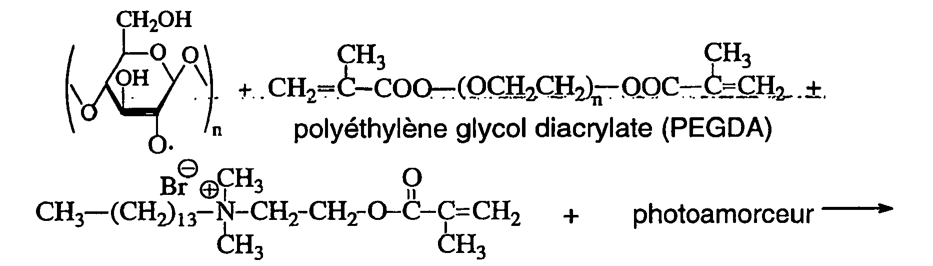 méthacryloyldiméthyltétradécyl ammonium bromure

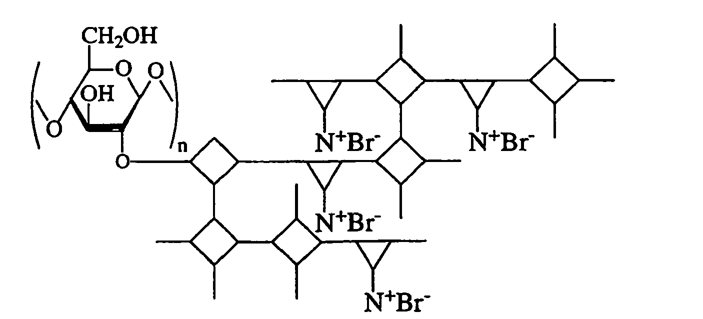

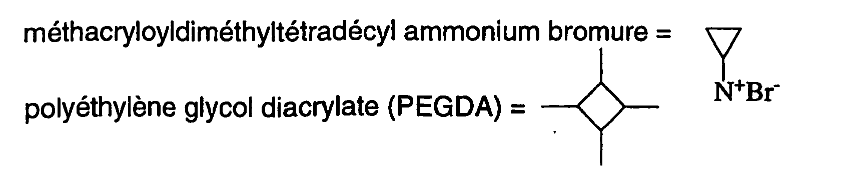

### 2.2 Traitement et greffage sur une plaque de PVC

Sur un carreau de PVC de 2x2 cm, on dépose une couche fine de mélange photopolymérisable composé de 20% de méthacryloyléthyldiméthylhexadécyle ammonium tetrafluoroborate, 41% de 3,4-époxycyclohexylméthyl-3,4-époxycyclohexane carboxylate (Cyracure^{®} UVR 6105) comme dit composé copolymérisable, 5% de triarylsulfonium antimonate (Cyracure^{®} UVI 6974) comme photoamorceur cationique, 10% de 1,4-butanediol comme solvant du composé bactéricide, 20% de tétrapropylèneglycoldiacrylate comme autre dit composé copolymérisable, 3% d'Irgacure^{®} 2020 (mélange de 80% 1-hydroxy-cyclohexyl-phenyl-cétone et 20% de phényl bis (2,4,6-triméthyl benzoyle)-phosphine oxyde) comme photoamorceur radicalaire, et un amorceur de greffage sous forme de couple redox formé de 0.5 % de peroxyde de benzoyle et 0.5 % de diméthylphénylamine comme composé organique réducteur. On irradie pendant 20 secondes à une intensité de 1000 mW/cm². Le revêtement obtenu est lié chimiquement sur le substrat, grâce aux liaisons covalentes qui se sont formées en surface, comme l'atteste le test aux rayons X.

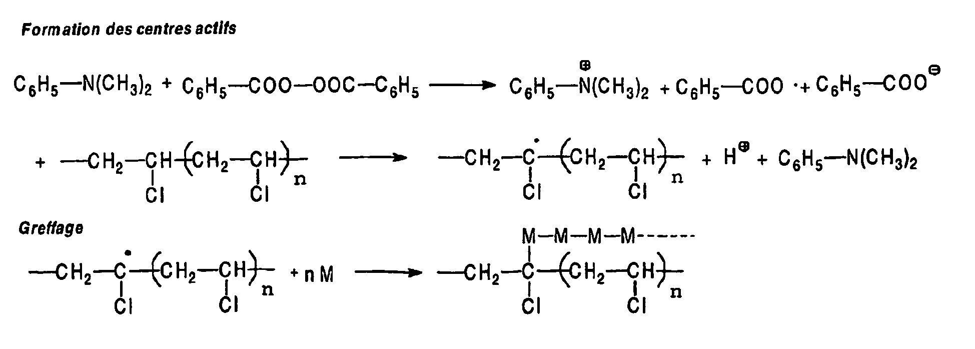

Le mécanisme d'amorçage et de greffage est présenté ci-dessus:
M représente les monomères bactéricides ou dits composés copolymérisables acrylate.
Par ailleurs, le photoamorceur cationique favorise la polymérisation dudit composé copolymérisable de type époxyde.

### 2.3. Greffage sur des plaques céramiques.

La photopolymérisation est effectuée dans ce cas par un mécanisme hybride radicalaire/cationique. La formulation comporte 45% de bis(3,4-époxy-6-méthylcyclohexylméthyl) adipate (Cyracure UVR 6128) comme dit composé copolymérisable, 20 % de méthacryloyléthyldiméthyltétradécyle ammonium tetrafluoroborate, 2% de triarylsulfonium antimonate (Cyracure UVI 6974) comme photoamorceur cationique, 30% de polyéthylène glycol diméthacrylate comme autre dit composé copolymérisable, 2% de diphényle (2,4,6-triméthylbenzoyl)-phosphine oxyde (Darocur TPO) comme photoamorceur radicalaire et 1% de vinyltriméthoxysilane comme agent de couplage. 2 g de ce mélange sont déposés sur une surface de 100 cm² et irradiés pendant 20 secondes à une intensité de 500 mW/cm².

L'agent de couplage silane réagit d'une part sur les groupements hydroxyles de surface du substrat en céramique par l'intermédiaire de groupements méthoxy en créant des liaisons de type éther selon le schéma réactionnel illustratif suivant

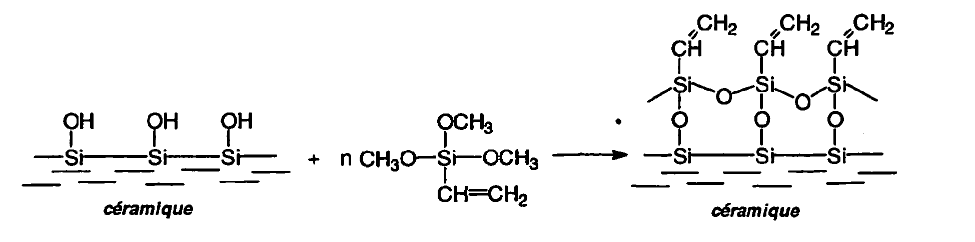

D'autre part, les groupements vinyles du silane participent ensuite à la copolymérisation photoamorcée par voie radicalaire en réagissant avec le monomère biocide et avec ledit composé copolymérisable acrylate selon le schéma réactionnel illustratif suivant :

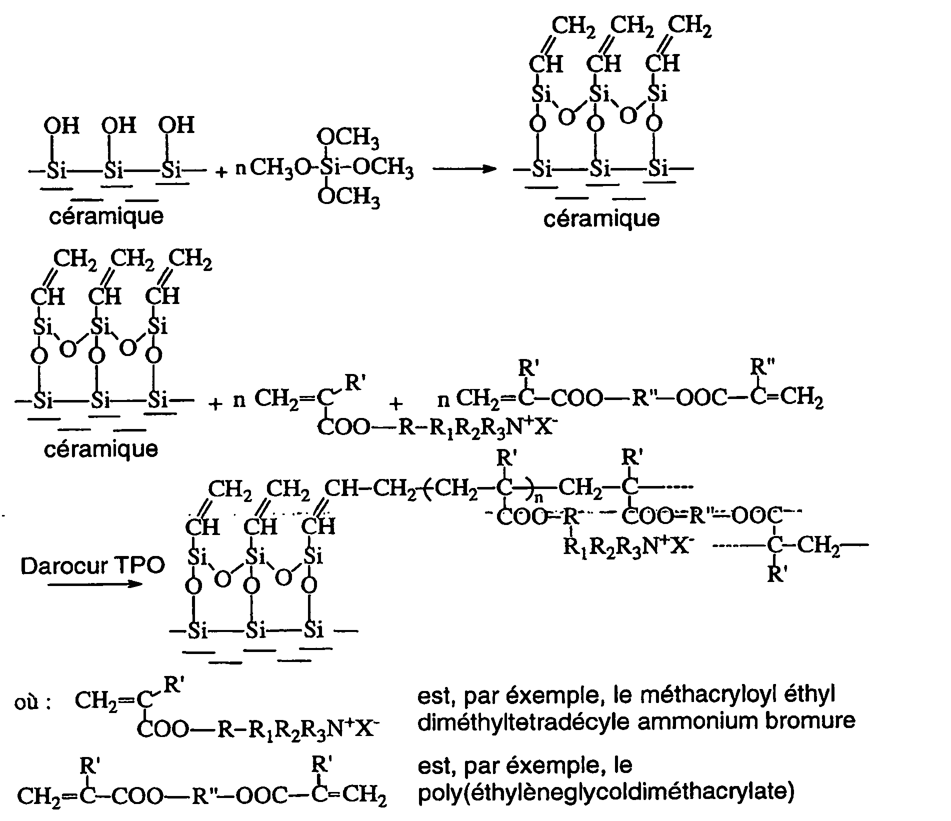

Le photoamorceur cationique favorise la copolymérisation du composé copolymérisable époxyde.

### - Greffage sur des carreaux de porcelaine

La couche supérieure des plaques de porcelaine utilisées a une structure chimique inorganique ayant la composition suivante : SiO₂ 55.3%, Al₂O₃ 8.3%, MgO 2.1 %, K_{z}O 3.8%, CaO 8.5%, ZnO 11.9%, ZrO₂ 7.4 %. Elle contient donc un important pourcentage de silice.

La surface des carreaux de porcelaine peut être traitée d'une façon semblable au procédé suivant :

Sur un carreaux de porcelaine de 25 cm², on dépose 1 g de formulation comportant 34% de 3,4-époxycyclohexylméthyl-3,4-époxycyclohexane carboxylate (Cyracure UVR 6105), 1% de triarylsulfonium antimonate (Cyracure UVI 6974) comme amorceur cationique, 42% de tétraéthylèneglycoldiacrylate, 10 % de méthacryloylpropyldiméthylhexadécyle ammonium tetrafluoroborate, 3% de photoamorceur radicalaire (2,4,6-triméthylbenzoyl)-phosphine oxyde (Darocur TPO) et 10% de 3-(triméthoxysilyl)propylméthacrylate comme agent de couplage. On irradie par UV pendant 20 secondes à 500 mW/cm². Le film de polymère bactéricide est greffé à la surface du carreau de porcelaine puisqu'il ne s'arrache pas même après lavage.

### 2.4. Traitement bactéricide et greffage effectués sur du bois.

Le traitement du bois par la technique UV peut être réalisé soit par un mécanisme radicalaire, soit par un mécanisme cationique.

2.4.1. A titre d'exemple, la formulation de base peut contenir :50% de polyuréthane acrylate (Laromer UA 19 T de BASF) comme dit composé copolymérisable, 25% de tripropylèneglycoldiacrylate comme autre dit composé copolymérisable, 19 % de méthacryloyléthyldiméthyldodécycle ammonium bromure, 5% d'Irgacure^{®} 2020 de Ciba Geigy comme photoamorceur radicalaire et comme amorceur de greffage 1% de 3-(triméthoxysilyl)propylméthacrylate.

2.4.2. A titre d'exemple, on applique sur une plaque de bois (2x2 cm) 1.5 g de formulation de base contenant : 10% de diméthyloctyléthoxyéthanolammonium tetrafluoroborate, 70% de 3,4-époxycyclohexylméthyl-3,4-époxycyclohexane carboxylate (Cyracure UVR 6105) comme dit composé copolymérisable, 5% de triarylsulfonium hexafluorophosphate (Cyracure UVI 6974) comme photoamorceur cationique, 10% de 1,4-butanediol comme solvant réactif du composé bactéricide et 5% de glycidoxypropyltriméthoxysilane comme agent de couplage. On irradie pendant 20 secondes à une intensité de 1000 mW/cm².

L'agent de couplage silane a pour rôle d'augmenter le greffage sur le substrat cellulosique, en créant une interface conformément au schéma réactionnel suivant :

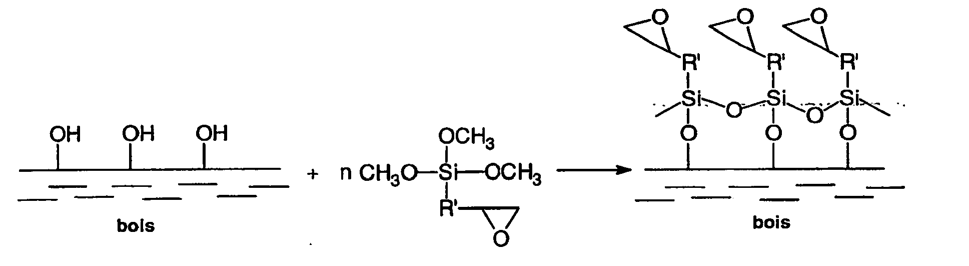

Les groupements époxy de l'agent de couplage silane copolymérisent ensuite avec les époxydes et le monomère bactéricide cationique de la formulation, en réalisant ainsi un greffage chimique du revêtement bactéricide.

L'amorçage de la polymérisation des composés copolymérisables époxydes s'effectue selon le schéma réactionnel illustratif suivant :

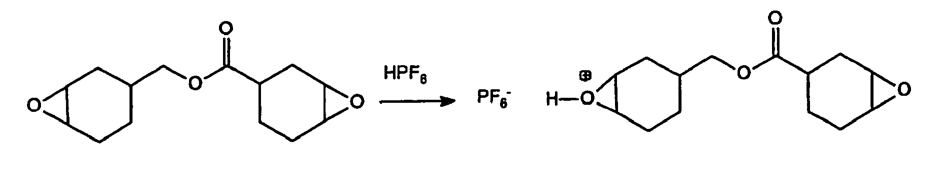

Et, la copolymérisation et le greffage sur l'interface constituée par l'agent de couplage s'effectuent selon le schéma réactionnel illustratif suivant :

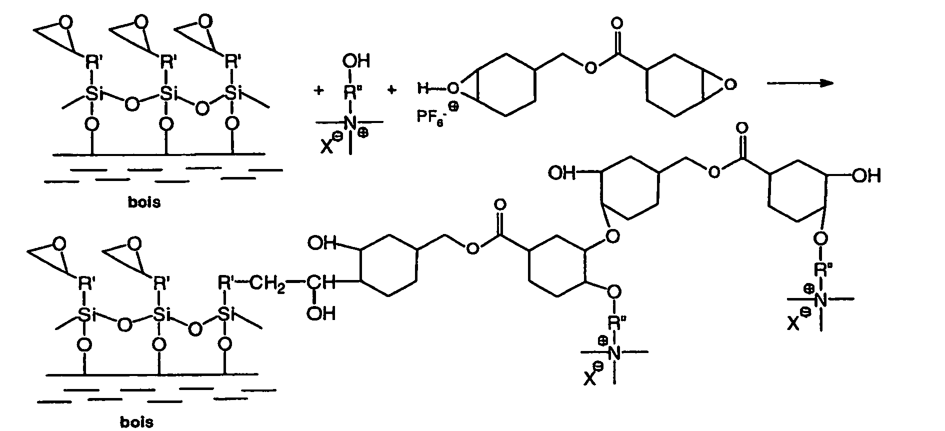

En fonction des propriétés souhaitées et du type d'application de la formulation, on peut faire varier le type d'époxyde et les rapports des constituants de la formulation.

### 2.5. Traitement bactéricide et greffage sur du verre

Sur une plaque de verre on applique 0.5 g de formulation photosensible contenant : 3% de 3-(triméthoxysilyl)propylméthacrylate, 5 %de photoamorceur radicalaire (2,4,6-triméthylbenzoyl)-phosphine oxyde (Darocur TPO), 10 % de méthacryloyléthyldiméthyldodécyle ammonium bromure et 82 % d'époxy acrylate (Laromer 8986 de BASF). On irradie pendant 10 secondes à une intensité de 500 mW/cm². La couche superficielle formée présente une bonne adhérence sur le support grâce aux liaisons covalentes qui se sont formées entre le monomère bactéricide, le composé polymérisable et les silanols présents en surface de la plaque de verre, par l'intermédiaire de l'agent de couplage (3-(triméthoxysilyl)propylméthacrylate). Le mécanisme d'action est semblable à ceux présentés pour le traitement des plaques de bois et de céramique.

### 2.6. Traitement bactéricide et greffage sur du gel-coat

Sur une plaque de "gel-coat" (résine polyester de type isophtalique chargée avec de la silice, réticulé avec styrène) de 5x5 cm on applique 0.2 g d'une formulation photosensible contenant : 10 % de méthacryloyléthyldiméthyloctyl ammonium bromure, 82% de polyéthylène glycol diacrylate, 2 % de 3-(triméthoxysilyl)propylméthacrylate, 4 % de photoamorceur radicalaire (2,4,6-triméthylbenzoyl)-phosphine oxyde (Darocur TPO), et un couple redox agissant en milieu organique, formé de 0.5% d'octoate de cobalt et 1.5% de peroxyde de méthyléthylcétone. On irradie pendant 20 secondes à une intensité de 1000 mW/cm². Dans ce cas également, la couche superficielle formée présente une bonne adhérence sur le support grâce aux liaisons covalentes qui se sont formées entre le monomère bactéricide, le composé polymérisable et la surface de la plaque de gel-coat, par l'intermédiaire de centres actifs qui se sont formés sous l'action d'amorceurs de greffage redox. Le mécanisme d'action est semblable à celui présenté pour le traitement des plaques de PVC. De son côté, l'agent de couplage agit sur les hydroxyles de surface, appartenant aux charges minérales ou existantes en bout de chaîne polyester.

### Exemple 3 : Résultats des tests bactéricides sur des textiles greffés avec des monomères bactéricides par UV selon l'exemple 2 :

Deux séries d'échantillons ont été testés :
- 1. textile (mélange coton/polyester)
   o 1.1 avant traitement (référence)
   o 1.2 après traitement de l'exemple 2.1
   o 1.3 après traitement et lavage
- 2. plaque de verre
   o 2.1 pas de traitement (référence)
   o 2.2 après traitement de l'exemple 2.5.
   o 2.3 après traitement et lavage

Le traitement a consisté au trempage (pour le textile) ou au dépôt sur plaque de verre d'une formulation comprenant entre autre un monomère antigerme et un photo amorceur et un agent de greffage, suivi d'une irradiation UV.

Les échantillons préparés ont été lavés de la manière suivante : les tissus en coton ont été lavés avec de l'eau lessiveuse pendant 30 h, à 60°C, sous forte agitation ; les plaques de verre ont été immergées dans l'eau chaude pendant 4 heures. Tous les échantillons ont été rincés avec de l'eau distillée et séchés. Pour chacun d'entre eux, y compris un tissu témoin non-traité, on a vérifié l'efficacité biocide sur deux souches différentes : Staphylococcus Aureus (bactérie) et l'Aspergillus Niger (fongi).

On a vérifié l'efficacité bactéricide par diffusion et par contact. Le procédé consiste à mettre en contact pendant un temps déterminé le tissu ainsi greffé et une suspension bactérienne des souches mentionnées. Dans un premier temps, l'efficacité par diffusion (*) a été déterminée par mesure d'une zone d'inhibition autour des échantillons déposés durant 24 heures à la surface d'un milieu gélosé pré-contaminé. Puis, au bout de 24 heures, l'efficacité par contact (**) des échantillons précédents a été déterminée par numération, après dépôt de l'inoculum suivant une procédure adaptée à la norme française XP G 39-010.

Chaque détermination (zone d'inhibition et numération) a été effectuée sur trois échantillons (les valeurs données comme .../.../...) la valeur apparaissant entre parenthèses, étant un valeur moyenne de celles-ci.

Tissu témoin (1.1), traité (1.2) et traité puis lavé (1.3) sur souche Staphylococcus aureus (bactérie).

| | Témoins (1.1) | Traités et non lavés (1.2) | Traités et lavés (1.3) |
|---|---|---|---|
| 24 heures de contact * | 0/0/0 | 2/3/2 | 2/2/1 |
| | (0) | (2,3) | (1,7) |
| Numération après 48 heures ** | >10⁶/ >10⁶/ | 0/0/0 | 0/0/0 |
| | >10⁶ | (0) | (0) |
| | (> 10⁶) | | |

Tissu témoin (1.1), traité (1.2) et traité puis lavé (1.3) sur souche Aspergillus Niger (fongi).

| | Témoins (1.1) | Traités et non lavés (1.2) | Traités et lavés (1.3) |
|---|---|---|---|
| 24 heures de contact | 0/0/0 | 2/2/2 | 0/0/0 |
| | (0) | (2) | (0) |
| Numération après 48 heures** | >10⁶/ | 0/0/0 | 100/190/130 |
| | >10⁶/>10⁶ | (0) | (140) |
| | (>10⁶) | | |

Plaque verre témoin (2.1), traité (2.2) et traité puis lavé (2.3) souche Staphylococcus aureus (bactérie).

| | Témoins (2.1) | Traités et non lavés (2.2) | Traités et lavés (2.3) |
|---|---|---|---|
| 24 heures de contact * | 0/0/0 | 5/4/5 | 5/4/4 |
| | (0) | (4,7) | (4,3) |
| Numération après 48 heures** | > 10⁶/ | 0/0/0 | 0/0/0 |
| | >10⁶/>10⁶ | (0) | (0) |
| | (> 10⁶) | | |

Plaque verre témoin (2.1), traité (2.2) et traité puis lavé (2.3) sur Aspergillus Niger (fongi)

| | Témoins (2.1) | Traités et non lavés (2.2) | Traités et lavés (2.3) |
|---|---|---|---|
| 24 heures de contact * | 0/0/0 | 6/4/4 | 5/5/4 |
| | (0) | (4,7) | (4,7) |
| Numération après 48 heures ** | >10⁶/ >10⁶/ | 160/200/190 | 340/270/230 |
| | >10⁶ | (183.3) | (280) |
| | (>10⁶) | | |

### Conclusions :

Pour les échantillons étudiés (plaques de verre et tissu greffés), on remarque une bonne activité biocide spécialement sur staphylococcus aureus, très connu comme responsable des infections propagées dans les hôpitaux (maladies nosocomiales). Après 48 heures on ne dénombre plus de colonies sur la surface du tissu et du film greffé sur verre, après traitement et lavage. Le tissu traité et lavé ne possède plus d'activité antibactérienne par diffusion, mais il est très actif par contact grâce au polymère biocide greffé, car le nombre de colonies est pratiquement nul. Une bonne efficacité par contact avec les moisissures, après 48 heures est également prouvée (réduction d'environ 4 log).

## Revendications

1. Procédé de traitement de la surface d'un substrat solide dans lequel on réalise une photopolymérisation et un greffage covalent in situ sur ledit substrat d'un copolymère biocide, **caractérisé en ce qu'**on effectue des étapes dans lesquelles :
a) on met en contact ledit substrat solide avec une formulation comprenant:
1- au moins un monomère comportant un groupement biocide,
2- au moins un composé copolymérisable avec ledit monomère biocide comprenant un monomère ou oligomère mono - di - ou plurifonctionnel(s) choisi parmi les monomères ou oligomères acrylate, époxyde ou vinyléther,
3- au moins un photoamorceur choisi parmi des photoamorceurs radicalaires ou cationiques, et
4- au moins un agent de greffage sur ledit substrat, et
b) On réalise une photocopolymérisation et un greffage covalent des copolymères obtenus en soumettant ladite formulation en contact avec ledit substrat solide à un rayonnement ultraviolet.

2. Procédé selon la revendication 1, **caractérisé en ce qu'**à l'étape a) de mise en contact de ladite formulation avec ledit substrat, on réalise les 2 sous-étapes successives suivantes:
a1)- on met en contact ledit substrat solide avec une première formulation partielle contenant ledit photoamorceur et ledit agent de greffage, et
a2)- après séchage, on ajoute une seconde formulation partielle contenant ledit monomère biocide et ledit composé copolymérisable.

3. Procédé selon l'une des revendications 1 ou 2,
**caractérisé en ce que** ledit monomère biocide comprend un monomère comportant un groupe de sels quaternaire répond à la formule (I) dans laquelle : 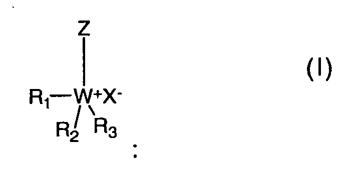 dans laquelle :
- Z représente un reste monovalent choisi parmi
- Soit 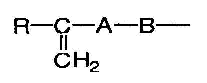
dans laquelle :
R représente -H ou -CH₃
A représente 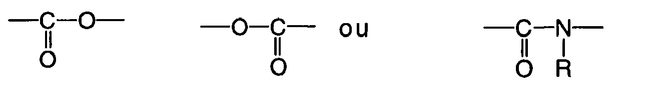
B représente une chaîne alkylène en. C₁-C₅, linéaire ou ramifiée ou un groupe arylène ou arylalkylène
- Soit 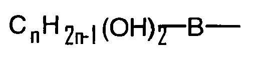
- Soit 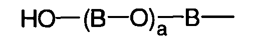 avec n représente un nombre entier de 1 à 20 ,
a représente un nombre entier de 0 à 3, et
B a la signification donnée ci-dessus
- W⁺ représente un cation N⁺ d'azote, P⁺ de phosphore ou Q⁺ d'un hétérocycle saturé ou insaturé comprenant un atome d'azote substitué par R₃, ou directement lié à A ou à B, et pouvant également contenir en plus de l'azote quaternisé un ou plusieurs hétéroatomes, identiques ou différents
- R₁ et R₂ identiques ou différents, représentent chacun une chaîne alkyle en C₁-C₅ ou un groupe aryle
- R₃ représente une chaîne alkyle en C₃-C₂₀ ou un groupe aryle ou arylalkyle
- X⁻ représente un anion.

4. Procédé selon la revendication 3, **caractérisé en ce que** ledit monomère biocide répond à la formule (I₁) suivante : 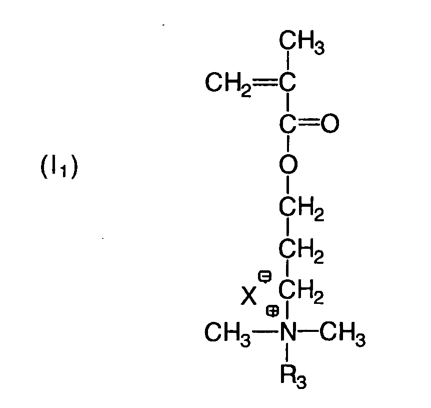 dans laquelle :
- R₃ représente une chaîne alkyle en C₃-C₂₀ un groupe aryle ou arylalkyle
- X⁻ représente un anion.

5. Procédé selon la revendication 3, **caractérisé en ce que** ledit monomère biocide répond à la formule (I₂) suivante : 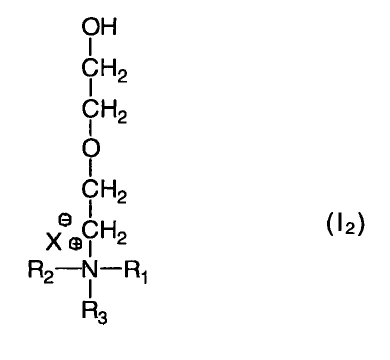 dans laquelle :
- X- représente un anion
- R₁ et R₂ identiques ou différents, représentent chacun une chaîne alkyle en C₁- C₅ ou un groupe aryle
- R₃ représente une chaîne alkyle en C₃-C₂₀ ou un groupe aryle ou arylalkyle

6. Procédé selon l'une des revendications 1 à 4, **caractérisé en ce que** ledit agent de greffage comprend des amorceurs de greffage choisis de préférence parmi des composés suivants :
• les composés peroxydes organiques ou inorganiques, éventuellement en mélange avec des composés organiques réducteurs, notamment des amines, ou en mélange avec des sels métalliques de Ag⁺, V²⁺, Ti²⁺, Co²⁺, Ce²⁺, Cu⁺, Fe²⁺, Na⁺, K^{+'} et
• les sels de cérium ou de vanadium dans leur état d'oxydation maximal, Ce⁴⁺ et V⁵⁺.

7. Procédé selon l'une des revendications 1 à 5, **caractérisé en ce que** ledit agent de greffage comprend un agent de couplage choisi de préférence parmi :
• des composés de type silane comportant (a) des groupements actifs photopolymérisable par voie radicalaire ou cationique avec lesdits monomères bactéricides et dits composés copolymérisables et (b) des groupements permettant la liaison covalente avec des groupements dudit substrat, et
• des composés de sels organométalliques.

8. Procédé selon l'une des revendications 1 à 7, **caractérisé en ce que** ledit composé copolymérisable comprend un monomère ou oligomère acrylate mono ou plurifonctionnel(s) de formule générale (11) 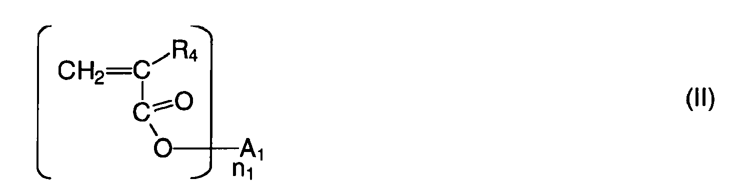 Dans laquelle A₁ est un reste organique
R₄ est un hydrogène ou un méthyle
n₁ est un entier de 1 à 6

9. Procédé selon l'une des revendications 1 à 8, **caractérisé en ce que** ledit composé copolymérisable comprend un monomère ou oligomère époxyde mono, di ou trifonctionnel répondant à la formule générale (III) suivante : 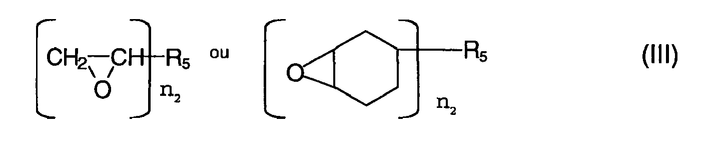 Dans laquelle n₂ est un entier de 1 à 3
R₅ est un reste organique

10. Procédé selon l'une des revendications 1 à 9, **caractérisé en ce que** ledit composé copolymérisable comprend un monomère ou oligomère de vinyléther répondant à la formule générale (IV) suivante : 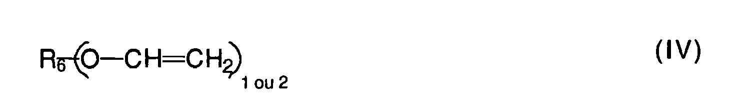 Dans laquelle R₆ est un reste organique

11. Procédé selon l'une des revendications précédentes, **caractérisé en ce que** ledit photoamorceur comprend un photoamorceur radicalaire comprenant de préférence un composé organique contenant au moins un cycle phényle substitué par un groupe carbonyle, azoté, phosphore ou soufré.

12. Procédé selon l'une des revendications 1 à 11, **caractérisé en ce que** ledit photoamorceur comprend un photoamorceur cationique choisi de préférence parmi les sels d'aryle sulfonium ou d'aryle iodonium.

13. Procédé selon l'une des revendications 1 à 12,
**caractérisé en ce que** la formulation comprend au moins deux photoamorceurs, respectivement radicalaire et cationique.

14. Procédé selon l'une des revendications précédentes, **caractérisé en ce que** ladite formulation comprend ses différents composants dans les proportions pondérales suivantes pour un total de 100%, à savoir:
1) 5 à 95%, de préférence 5 à 50%, de dits monomères biocides,
2) 5 à 95%, de préférence 10 à 75%, de dits composés copolymérisables,
3) 1 à 10% de dit photoamorceur, et
4) 0,01 à 10% de dit agent de greffage.

15. Procédé selon l'une des revendications précédentes, **caractérisé en ce qu'**à à l'étape 2), on applique un rayonnement ultraviolet d'une intensité de 10 à 5000 mW/cm², de préférence de 100 à 1000 mW/cm², de longueur d'onde comprise entre 280 et 500 nm, et de préférence, on utilise un filtre permettant l'élimination des radiations infrarouges et l'irradiation à une longueur d'ondes de 360 à 500 nm.

16. Procédé selon l'une des revendications précédentes, **caractérisé en ce que** ledit substrat est constitué d'un matériau organique naturel ou synthétique, de préférence un matériau de type plastique, ou un matériau à base de polymère naturel tel que des polysaccharides.

17. Procédé selon la revendication 16, **caractérisé en ce que** ledit substrat est choisi parmi des matériaux organiques fibreux textiles ou non tissés, réalisés à base de fils ou fibres synthétiques ou naturelles.

18. Procédé selon l'une des revendications 1 à 15, **caractérisé en ce que** ledit substrat solide est constitué d'un matériau inorganique, de préférence de matériau céramique ou du verre.

19. Procédé selon l'une des revendications précédentes, **caractérisé en ce que** ladite formulation comprend :
- au moins un dit amorceur de greffage comprenant de préférence un composé peroxyde organique ou un sel de cérium Ce⁴⁺, et
- au moins un dit photoamorceur radicalaire.

20. Procédé selon l'une des revendications précédentes, **caractérisé en ce que** ladite formulation comprend :
- au moins un dit photoamorceur cationique ou radicalaire, et
- au moins un dit agent de couplage de type silane.

21. Procédé selon l'une des revendications 1 à 20 **caractérisé en ce que** ladite formulation comporte au moins un dit composé copolymérisable bi ou pluri fonctionnel et ledit copolymère biocide greffé obtenu est réticulé.

22. Substrat solide comportant un polymère présentant des propriétés biocides, greffé à sa surface, obtenu par le procédé selon l'une des revendications précédentes.

## Claims

1. A process for treating the surface of a solid substrate in which photopolymerisation and covalent grafting are performed in situ on said substrate of a biocidal copolymer, **characterised in that** the following steps are carried out in which:
a) said solid substrate is put in contact with a formulation comprising:
1- at least one monomer comprising a biocidal group,
2- at least one copolymerisable compound with said biocidal monomer comprising a mono-, di-, or plurifunctional monomer or oligomer selected amongst acrylate, epoxide and vinyl ether monomers or oligomers,
3- at least one photoprimer selected amongst radical and cationic photoprimers, and
4- at least one grafting agent on said substrate, and
b) photocopolymerisation and covalent grafting of the copolymers obtained are carried into effect by subjecting said formulation in contact with said solid substrate to ultraviolet radiation.

2. The process according to Claim 1, **characterised in that** in step a) for placing said formulation in contact with said substrate, the following two successive sub-steps are carried out:
a1) said solid substrate is put in contact with a first partial formulation containing said photoprimer and said grafting agent, and
a2) after drying, a second partial formulation containing said biocidal monomer and said copolymerisable compound is added.

3. The process according to Claim 1 or claim 2, **characterised in that** said biocidal monomer comprises a monomer comprising a group of quaternary salts responding to the formula (I) in which: 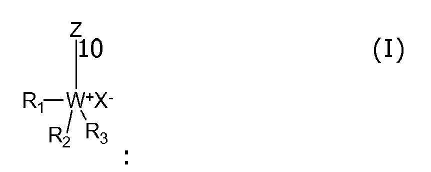 in which:
- Z represents a radical monovalent selected amongst
- either 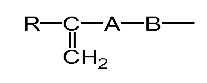
in which:
R represents -H or -CH₃
A represents 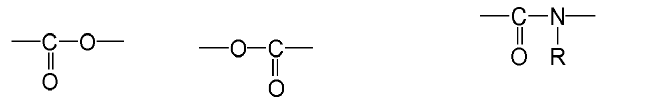
B represents an alkylene chain in C₁-C₅, linear or branched or an arylene or arylalkylene group
- or 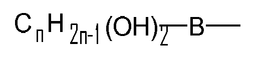
- or 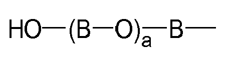
where n represents an integer from 1 to 20 ,
a represents an integer from 0 to 3, and
B has the meaning given hereinabove
- W⁺ represents a N⁺ nitrogen cation, a P⁺ phosphorous cation or a Q⁺ heterocyclic cation, saturated or unsaturated, comprising a nitrogen atom substituted by R₃, or directly bonded to A or to B, and likewise able to contain in addition to quaternised nitrogen one or more heteroatoms, identical or different
- R₁ and R₂ identical or different, each represent an alkyl chain in C₁-C₅ or an aryl group
- R₃ represents an alkyl chain in C₃-C₂₀, or an aryl or arylalkyl group
- X⁻ represents an anion.

4. The process according to Claim 3, **characterised in that** said biocidal monomer responds to the following formula (I₁): 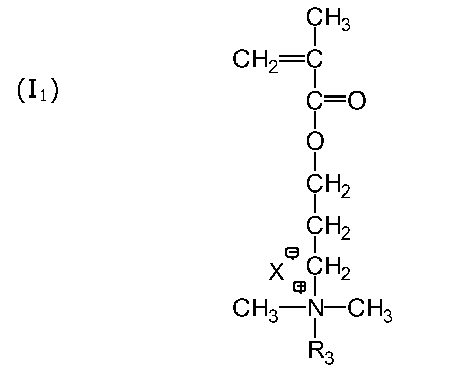 in which:
- R₃ represents an alkyl chain in C₃-C₂₀ an aryl or arylalkyl group
- X⁻ represents an anion.

5. The process according to Claim 3, **characterised in that** said biocidal monomer responds to the following formula (I₂): 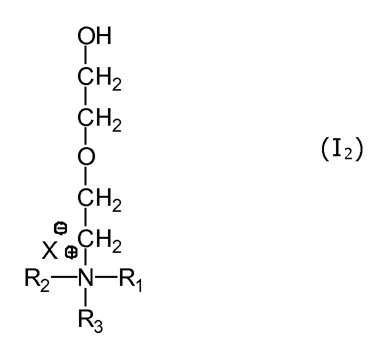 in which:
- X⁻ represents an anion
- R₁ and R₂ identical or different, each represent an alkyl chain in C₁- C₅ or an aryl group
- R₃ represents an alkyl chain in C₃-C₂₀ or an aryl or arylalkyl group.

6. The process according to one of Claims 1 to 4, **characterised in that** said grafting agent comprises grafting primers preferably selected amongst the following compounds:
• organic and inorganic peroxide compounds, optionally in a mixture with reductive organic compounds, especially amines, or in a mixture with metallic salts of Ag⁺, V²⁺, Ti²⁺, CO²⁺ Ce²⁺, Cu⁺, Fe²⁺ Na⁺, K⁺, and
• cerium or vanadium salts in their maximum oxidation state, Ce⁴⁺ and V⁵⁺.

7. The process according to one of Claims 1 to 5, **characterised in that** said grafting agent comprises a coupling agent preferably selected amongst:
• compounds of silane type comprising (a) active groups photopolymerisable radically or cationically with said bactericidal monomers and said copolymerisable compounds and (b) groups enabling a covalent bond with groups of said substrate, and
• compounds of organometallic salts.

8. The process according to one of Claims 1 to 7, **characterised in that** said copolymerisable compound comprises a mono or plurifunctional acrylate monomer or oligomer of general formula (II) 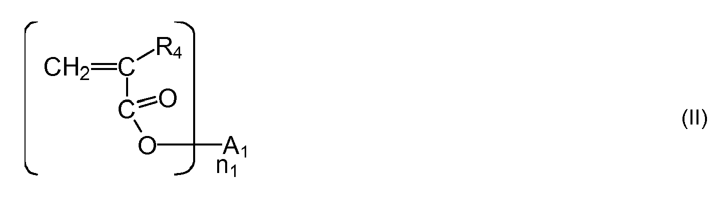 In which
A₁ is an organic radical
R₄ is a hydrogen or a methyl
n₁ is an integer from 1 to 6

9. The process according to one of Claims 1 to 8, **characterised in that** said copolymerisable compound comprises a mono, di or trifunctional epoxide monomer or oligomer, responding to the following general formula (III): 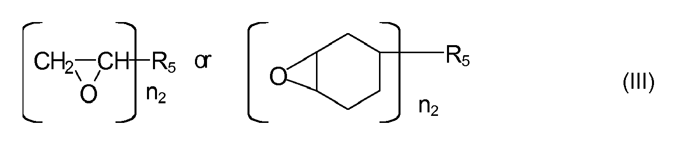
In which n₂ is an integer from 1 to 3
R₅ is an organic radical.

10. The process according to one of Claims 1 to 9, **characterised in that** said copolymerisable compound comprises a vinyl ether monomer or oligomer responding to the following general formula (IV): 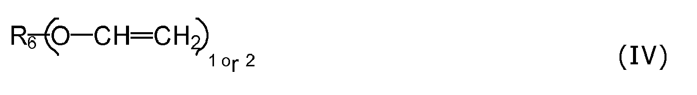 In which R₆ is an organic radical.

11. The process according to one of the preceding claims, **characterised in that** said photoprimer comprises a radical photoprimer preferably comprising an organic compound containing at least one phenyl cycle substituted by a carbonyl, nitrogen, phosphorous or sulphur group.

12. The process according to one of Claims 1 to 11, **characterised in that** said photoprimer comprises a cationic photoprimer preferably selected amongst aryl sulfonium or aryl iodonium salts.

13. The process according to one of Claims 1 to 12, **characterised in that** the formulation comprises at least two photoprimers, respectively radical and cationic.

14. The process according to one of the preceding claims, **characterised in that** said formulation comprises its different constituents in the following weight proportions for a total of 100%, namely:
1) 5 to 95%, preferably 5 to 50%, of said biocidal monomers,
2) 5 to 95%, preferably 10 to 75%, of said copolymerisable compounds,
3) 1 to 10% of said photoprimer, and
4) 0.01 to 10% of said grafting agent.

15. The process according to one of the preceding claims, **characterised in that** in step 2), ultraviolet radiation is applied at an intensity of 10 to 5000 mW/cm², preferably from 100 to 1000 mW/cm², having a wavelength of between 280 and 500 nm, and a filter is preferably used effectively eliminating infrared radiation and irradiation having a wavelength of 360 to 500 nm.

16. The process according to one of the preceding claims, **characterised in that** said substrate is constituted by a natural or synthetic organic material, preferably a material of plastic type, or a material based on natural polymer such as polysaccharides.

17. The process according to Claim 16, **characterised in that** said substrate is selected amongst fibrous textile or nonwoven organic materials, based on synthetic or natural threads or fibres.

18. The process according to one of Claims 1 to 15, **characterised in that** said solid substrate is constituted by an inorganic material, preferably ceramic material or glass.

19. The process according to one of the preceding claims, **characterised in that** said formulation comprises:
- at least one grafting primer comprising preferably an organic peroxide compound or a cerium salt Ce⁴⁺, and
- at least one said radical photoprimer.

20. The process according to one of the preceding claims, **characterised in that** said formulation comprises:
- at least one said cationic or radical photoprimer, and
- at least one said coupling agent of silane type.

21. The process according to one of Claims 1 to 20 **characterised in that** said formulation comprises at least one said bi or pluri functional copolymerisable compound and said grafted biocidal copolymer obtained is reticulated.

22. A solid substrate comprising a polymer exhibiting biocidal properties, grafted to its surface, obtained by the process according to one of the preceding claims.

## Patentansprüche

1. Verfahren zur Behandlung der Oberfläche eines festen Substrates, bei dem man eine Photopolymerisation und ein kovalentes Pfropfen in situ von einem bioziden Copolymer auf dem Substrat ausführt, **dadurch gekennzeichnet, daß** man Schritte ausführt, in denen:
a) man das feste Substrat mit einer Zusammensetzung in Kontakt bringt, welche umfaßt:
1) wenigstens ein Monomer, das eine biozide Gruppe umfaßt,
2) wenigstens eine Verbindung, die copolymerisierbar ist mit dem bioziden Monomer, umfassend ein Monomer oder Oligomer, das mono-, di- oder mehrfachfunktionell ist, gewählt unter den Acrylat-, Epoxid- oder Vinylethermonomeren oder -oligomeren,
3) wenigstens einen Photostarter, gewählt unter den radikalischen oder kationischen Photostartern, und
4) wenigstens ein Mittel zum Pfropfen auf dem Substrat, und
b) man eine Photopolymerisation und kovalentes Pfropfen der erhaltenen Copolymere ausführt, indem man die Zusammensetzung mit dem festen Substrat einer UV-Bestrahlung unterzieht.

2. Verfahren nach Anspruch 1, **dadurch gekennzeichnet, daß** man bei Schritt a) des In-Kontakt-Bringens der Zusammensetzung mit dem Substrat die folgenden beiden Unterschritte sukzessive ausführt:
a1) man bringt das feste Substrat mit einer ersten Teilzusammensetzung, die den Photostarter und das Pfropfreagenz enthält, in Kontakt und
a2) nach Trocknung gibt man eine zweite Teilzusammensetzung zu, die das biozide Monomer und die copolymerisierbare Verbindung enthält.

3. Verfahren nach einem der Ansprüche 1 oder 2, **dadurch gekennzeichnet, daß** das biozide Monomer ein Monomer umfaßt, das eine quaternäre Salzgruppe aufweist und der Formel (I) entspricht: 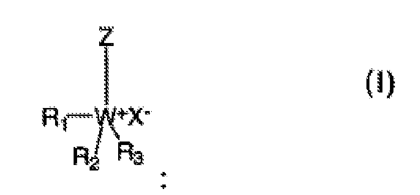 in welcher:
- Z ein monovalenter Rest ist, gewählt unter
- entweder 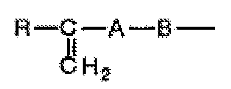
worin:
R -H oder -CH₃ darstellt, 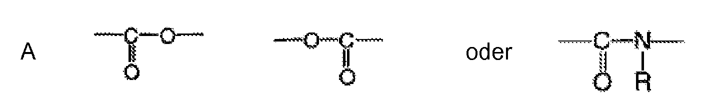 darstellt, B eine lineare oder verzweigte C₁-C₅-Alkylenkette oder eine Arylen- oder Arylalkylengruppe darstellt,
- oder 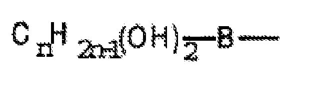
- oder 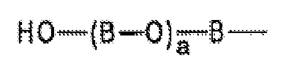
wobei
n eine ganze Zahl von 1 bis 20 darstellt,
a eine ganze Zahl von 0 - 3 darstellt, und
B die oben angegebene Bedeutung hat,
- W⁺ ein Kation N⁺ von Stickstoff, P⁺ von Phosphor oder Q⁺ von einem gesättigten oder ungesättigten Heterozyklus darstellt, der ein Stickstoffatom umfaßt, das substituiert ist durch R₃ oder direkt gebunden an A oder an B und gegebenenfalls zusätzlich quarternisierten Stickstoff oder mehrere identische oder verschiedene Heteroatome enthalten kann
- R₁ und R₂ identisch oder verschieden jedes eine C₁-C₅-Alkylkette oder eine Arylgruppe darstellen,
- R₃ eine C₃-C₂₀-Alkylkette oder eine Aryl- oder Arylalkylgruppe darstellt,
- X⁻ ein Anion darstellt.

4. Verfahren nach Anspruch 3, **dadurch gekennzeichnet, daß** das biozide Monomer der folgenden Formel (I₁) entspricht: 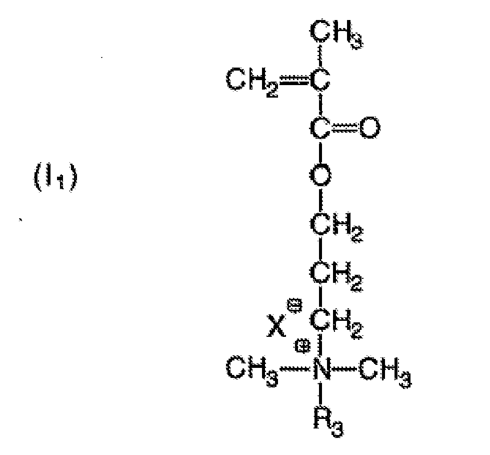 in welcher:
- R₃ eine C₃-C₂₀-Alkylkette oder eine Aryl- oder Arylalkylgruppe darstellt,
- X⁻ ein Anion darstellt.

5. Verfahren nach Anspruch 3, **dadurch gekennzeichnet, daß** das biozide Monomer der folgenden Formel (I₂) entspricht: 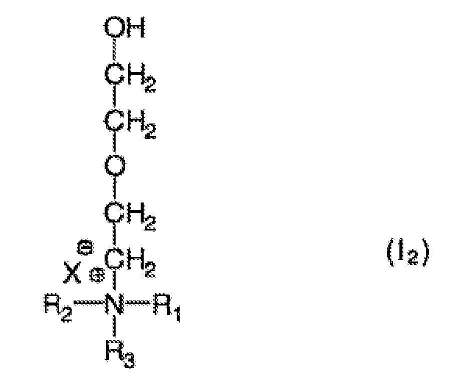 in welcher:
- X⁻ ein Anion darstellt.
- R₁ und R₂ identisch oder verschieden jedes eine C₁-C₅-Alkylkette oder eine Arylgruppe darstellen,
- R₃ eine C₃-C₂₀-Alkylkette oder eine Aryl- oder Arylalkylgruppe darstellt.

6. Verfahren nach einem der Ansprüche 1 bis 4, **dadurch gekennzeichnet, daß** das Pfropfreagenz Pfropfstarter umfaßt, die vorzugsweise gewählt sind unter den folgenden Verbindungen:
- die organischen oder anorganischen Peroxidverbindungen, gegebenenfalls im Gemisch mit organischen Reduktionsverbindungen, insbesondere Aminen oder im Gemisch mit Metallsalzen von Ag⁺, V²⁺, Ti²⁺, Co²⁺, Ce²⁺, Cu⁺, Fe²⁺, Na⁺, K⁺ und
- die Salze von Cer oder Vanadium in deren maximalen Oxidationszustand, Ce⁴⁺ und V⁵⁺.

7. Verfahren nach einem der Ansprüche 1 bis 5, **dadurch gekennzeichnet, daß** das Pfropfmittel ein Kopplungsreagenz umfaßt, das vorzugsweise gewählt ist unter:
- den Verbindungen vom Silantyp, umfassend (a) aktive, auf radikalischem oder kationischem Wege mit den bakteriziden Monomeren und den copolymerisierbaren Verbindungen photopolymerisierbare Gruppen und (b) Gruppen, die die kovalente Bindung mit Gruppen des Substrats erlauben, und
- Organometallsalzverbindungen.

8. Verfahren nach einem der Ansprüche 1 bis 7, **dadurch gekennzeichnet, daß** die copolymerisierbare Verbindung ein mono- oder mehrfachfunktionelles Acrylatmonomer oder -oligomer mit allgemeiner Formel (II) umfaßt 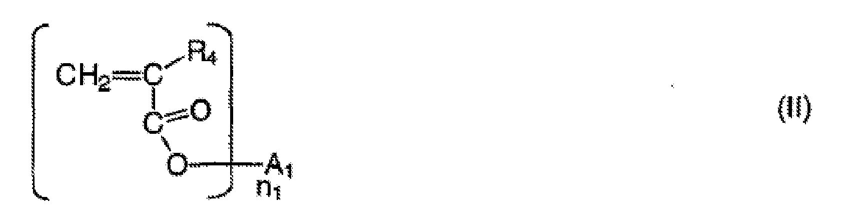 in welcher
A₁ ein organischer Rest ist
R₄ ein Wasserstoff oder Methyl ist
n₁ eine ganze Zahl von 1 bis 6 ist.

9. Verfahren nach einem der Ansprüche 1 bis 8, **dadurch gekennzeichnet, daß** die copolymerisierbare Verbindung ein mono-, di- oder trifunktionelles Epoxidmonomer oder -oligomer umfaßt, das der folgenden allgemeinen Formel (III) entspricht: 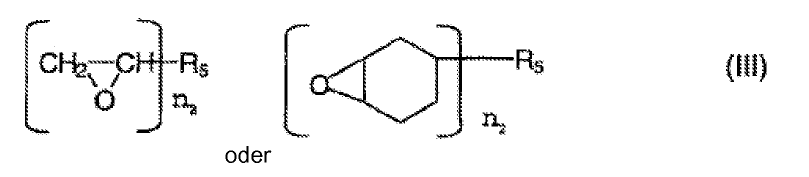 in welcher:
n₂ eine ganze Zahl von 1 bis 3 und
R₅ ein organischer Rest ist.

10. Verfahren nach einem der Ansprüche 1 bis 9, **dadurch gekennzeichnet, daß** die copolymerisierbare Verbindung ein Vinylethermonomer oder -oligomer umfaßt, das der folgenden allgemeinen Formel (IV) entspricht: 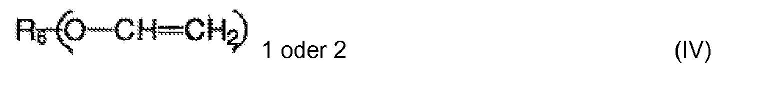 in welcher R₆ ein organischer Rest ist.

11. Verfahren nach einem der vorhergehenden Ansprüche, **dadurch gekennzeichnet, daß** der Photostarter einen Radikalphotostarter umfaßt, der vorzugsweise eine organische Verbindung umfaßt, die wenigstens einen Phenylring enthält, der substituiert ist durch eine Carbonylgruppe, stickstoffhaltige, phosphorhaltige oder schwefelhaltige Gruppe.

12. Verfahren nach einem der Ansprüche 1 bis 11, **dadurch gekennzeichnet, daß** der Photostarter einen kationischen Photostarter umfaßt, vorzugsweise gewählt unter den Arylsulfonium- oder Aryliodoniumsalzen.

13. Verfahren nach einem der Ansprüche 1 bis 12, **dadurch gekennzeichnet, daß** die Formulierung wenigstens zwei Photostarter umfaßt, die jeweils radikalisch und kationisch sind.

14. Verfahren nach einem der vorhergehenden Ansprüche, **dadurch gekennzeichnet, daß** die Formulierung unterschiedliche Verbindungen in den folgenden Gewichtsanteilen für eine Gesamtheit von 100 % umfaßt, nämlich:
1) 5 bis 95%, vorzugsweise 5 bis 50% der genannten bioziden Monomere,
2) 5 bis 95%, vorzugsweise 10 bis 75% der genannten copolymerisierbaren Verbindungen,
3) 1 bis 10% des genannten Photostarters, und
4) 0,01 bis 10% des genannten Pfropfreagenzes.

15. Verfahren nach einem der vorhergehenden Ansprüche, **dadurch gekennzeichnet, daß** man bei Schritt 2) eine UV-Bestrahlung einer Intensität von 10 bis 5000 mW/cm², vorzugsweise 100 bis 1000 mW/cm², mit einer Wellenlänge zwischen 280 und 500 nm anwendet und vorzugsweise einen Filter verwendet, der die Entfernung der Infrarotstrahlen und die Bestrahlung bei einer Wellenlänge von 360 bis 500 nm erlaubt.

16. Verfahren nach einem der vorhergehenden Ansprüche, **dadurch gekennzeichnet, daß** das Substrat aus einem natürlichen oder synthetischen organischen Material besteht, vorzugsweise einem Material vom Kunststofftyp oder einem Material auf Basis von natürlichem Polymer, wie Polysacchariden.

17. Verfahren nach Anspruch 16, **dadurch gekennzeichnet, daß** das Substrat gewählt wird unter den organischen Textilfaser- oder Filzmaterialien, ausgeführt auf Basis von synthetischen oder natürlichen Fäden oder Fasern.

18. Verfahren nach einem der Ansprüche 1 bis 15, **dadurch gekennzeichnet, daß** das feste Substrat aus einem anorganischen Material besteht, vorzugsweise einem keramischen Material oder Glas.

19. Verfahren nach einem der vorhergehenden Ansprüche, **dadurch gekennzeichnet, daß** die Zusammensetzung umfaßt:
- wenigstens einen Starter zum Pfropfen, der vorzugsweise eine organische Peroxidverbindung oder ein Ce⁴⁺-Cersalz umfaßt, und
- wenigstens einen genannten Photoradikalstarter.

20. Verfahren nach einem der vorhergehenden Ansprüche, **dadurch gekennzeichnet, daß** die Zusammensetzung umfaßt:
- wenigstens einen genannten kationischen oder radikalischen Photostarter, und
- wenigstens ein genanntes Kopplungsreagenz vom Silantyp.

21. Verfahren nach einem der Ansprüche 1 bis 20, **dadurch gekennzeichnet, daß** die Zusammensetzung wenigstens eine copolymerisierbare bi- oder mehrfachfunktionelle Verbindung umfaßt und das erhaltene biozide gepfropfte Copolymer vernetzt ist.

22. Festes Substrat, umfassend ein Polymer, das biozide Eigenschaften aufweist, gepfropft an seiner Oberfläche ist und durch das Verfahren nach einem der vorhergehenden Ansprüche erhalten ist.
